# EUROPEAN PATENT SPECIFICATION

(11) **EP 4 098 904 B1**
(45) Date of publication and mention of the grant of the patent: **01.05.2024**
(21) Application number: 21177369.2
(22) Date of filing: 02.06.2021
(51) Int. Cl.: F16F 9/54, F16F 9/32, B61F 5/00

(54) **DAMPING ARRANGEMENT FOR A RAIL VEHICLE**
DÄMPFUNGSANORDNUNG FÜR EIN SCHIENENFAHRZEUG
AGENCEMENT D'AMORTISSEMENT POUR VÉHICULE FERROVIAIRE

(43) Date of publication of application: 07.12.2022
(73) Proprietor: ALSTOM Holdings, 93400 Saint-Ouen-sur-Seine (FR)
(72) Inventor: Bieker, Guido, 57399 Kirchhundem (DE); Pieper, Reinhard, 57399 Kirchhundem (DE)
(74) Representative: Cohausz & Florack

(56) References cited:
- CN-A- 110 884 520
- JP-A- 2014 151 824
- US-A- 5 927 523

## Description

### BACKGROUND OF THE INVENTION

The present invention relates to a damper arrangement for a rail vehicle, in particular, a light rail vehicle, comprising a damper unit, wherein the damper unit comprises a piston unit and a cylinder unit defining an axial direction and a radial direction. The cylinder unit comprises a sealingly closed working chamber filled with a damping fluid and axially slidably receiving a piston element of the piston unit. The piston element separates the working chamber in a first space and a second space. The piston unit has a first interface part forming a first interface of the damper unit to a first vehicle component of the rail vehicle and facing away from the cylinder unit. The cylinder unit has a second interface part forming a second interface of the damper unit to a second vehicle component of the rail vehicle and facing away from the piston unit. The invention further relates to a corresponding rail vehicle unit comprising a rail vehicle structure and at least one such damper arrangement.

In a rail vehicle relative motion between its components, such as the wagon body and the running gear supporting the wagon body, has to be damped to a certain extent to achieve riding comfort for the passengers but also to ensure derailment safety of the vehicle. Hence, typically, a series of dampers are used to provide such damping, typically in a transverse direction of the vehicle and/or about a rotational axis parallel to a vehicle height axis. For example, when a rail vehicle enters a curved section of the track, the running gear executes a yaw motion (i.e., a rotation about a rotational axis parallel to a vehicle height axis) with respect to the wagon body which has to be damped.

Proper rotational damping is especially relevant or critical with light rail vehicles (LRV) in a so called multi-articulation configuration, where a series of wagon bodies are articulated to each other with each of them only supported on a single running gear. Here, proper rotation damping is critical to make sure that the wagon body will yaw smoothly when entering a curved track section. Conventionally, layered rubber-metal elements are used as rotational dampers to provide this rotational damping. A problem is, however, that these rubber-metal elements exhibit a linear damping force to stroke characteristic which does not yield fully satisfactory results. This is due to the fact that fairly high damping forces have to be achieved over a comparatively short deflection of the damper such that the rotational dampers have to be comparatively stiff which in turn contravenes riding comfort. This problem is aggravated by the fact that conventional rotational dampers have to be configured to provide the maximum forces that are to be expected during operation of the rail vehicle. These maximum forces are typically defined by the maximum speed of yaw motion to be expected for a particular rail vehicle on a particular track layout.

Document CN110884520 is considered as the closest prior art and discloses a damper arrangement with an outer cylinder working as a damper support unit.

### SUMMARY OF THE INVENTION

Thus, it is the object of the present invention to provide a damper arrangement for a rail vehicle and a rail vehicle unit as described above, which do not show the disadvantages described above, or at least show them to a lesser extent, and, in particular, allows in a simple, space saving and efficient manner damping of motions between vehicle components maintaining high derailment safety while at the same time ensuring high passenger comfort during operation of the rail vehicle.

The above objects are achieved starting from a damper arrangement according to the preamble of claim 1 by the features of the characterizing part of claim 1.

The present invention is based on the technical teaching that, on the one hand, it is possible to maintain high derailment safety while at the same time ensuring high passenger comfort during operation of the rail vehicle in a simple, space saving and efficient manner if the damper arrangement is executed as a fluid damper arrangement with a damping force that has a (quasi) static force component stemming from the compression of a damping fluid and a dynamic component stemming from a restricted flow of the damping medium through a radial gap between a piston element and a cylinder unit of the damping unit. This has the great advantage that the dynamic component can be configured or adjusted in a manner which is essentially independent from the configuration of the static component. This adds a considerable degree of freedom in the layout which enables smoother build-up of the damping force in less curved tracks (which result in comparatively low yaw speeds) while enabling appropriately rapid build-up of considerable damping forces in more pronouncedly curved tracks (which result in comparatively high yaw speeds).

On the other hand, it is advantageous to use a damper support unit which supports the damper unit and is connected to a vehicle component (e.g., a part of a running gear or a part of a wagon body). By this means it is possible to use the interfaces of the damper unit to interface with another vehicle component (e.g., a corresponding part of a wagon body or a part of a running gear, respectively) to damp motions between these components in opposite directions yet always using the same deflection damper unit from its neutral state. In particular, this allows optionally implementing a configuration where return of the damping unit to its neutral state is greatly facilitated in that the dynamic force component is considerably reduced by bypassing the flow restriction for the damping fluid formed by the radial gap.

Hence, according to one aspect, the present invention relates to a damper arrangement for a rail vehicle, in particular, a light rail vehicle, comprising a damper unit, wherein the damper unit comprises a piston unit and a cylinder unit defining an axial direction and a radial direction. The cylinder unit comprises a sealingly closed working chamber filled with a damping fluid and axially slidably receiving a piston element of the piston unit, wherein the piston element separates the working chamber in a first space and a second space. The piston unit has a first interface part forming a first interface of the damper unit to a first vehicle component of the rail vehicle and facing away from the cylinder unit, while the cylinder unit has a second interface part forming a second interface of the damper unit to a second vehicle component of the rail vehicle and facing away from the piston unit. A damper support unit supports the damper unit, wherein the damper unit is configured to provide a damping force damping a relative motion between a third vehicle component connected to the damper support unit and at least one of the first vehicle component and the second vehicle component along the axial direction. The damper support unit restricts motion of the piston unit with respect to the damper support unit in a first direction along the axial direction while allowing motion of the piston unit in an opposite second direction along the axial direction. The damper support unit further restricts motion of the cylinder unit with respect to the damper support unit in the second direction while allowing motion of the cylinder unit in the first direction. The piston element defines a radial gap with respect to the cylinder unit in the radial direction, the radial gap restricting flow of the damping medium between the first space and the second space in order to provide a defined dynamic characteristic of the damping force which is dependent on a speed of a relative motion between of the piston element and the cylinder unit along the axial direction.

Preferably, the working chamber comprises a first compartment and a second compartment, the piston element, in a neutral state of the damper unit, being located in the area of a transition between the first compartment and the second compartment. By this means it is possible, for example, to provide a larger diameter second compartment than the diameter of the first compartment receiving the piston element. This can be used to have an axial length of the radial gap vary as the piston element increasingly plunges into the first compartment, thereby varying the flow resistance provided by the radial gap. With certain variants, the radial gap may be formed between a wall of the first compartment and the piston element. With certain variants, the first compartment has a first diameter and the second compartment has a second diameter, the first diameter being 20% to 39%, preferably 51% to 70%, more preferably 40% to 50%, of the second diameter. In addition or as an alternative, in the neutral state of the damper unit, the first space may have a first volume and the second space may have a second volume, the first volume being 10% to 24%, preferably 36% to 60%, more preferably 25% to 35%, of the second volume. In any of these cases beneficial flow properties and pressure propagation may be achieved during operation.

It will be appreciated that the gap width may stay essentially constant during operation, i.e., the gap width may be at least substantially constant along the axial direction. With certain beneficial variants, the radial gap, in a neutral state of the damper unit, has a first gap width in the radial direction, and the radial gap, in a deflected state of the damper unit where the damper unit exerts the damping force, has a second gap width which may be different than the first gap width. It will be appreciated that the deflected state of the damper unit may be the state of maximum deflection of the damper unit achieved during normal operation of the vehicle and the damping arrangement, respectively.

By this means it is possible to tune the magnitude of the dynamic component of the damping force over the stroke of the piston element. It will be appreciated that a change to the gap width influences the dynamic component of the damping force by the third power such that a considerable adjustment may be achieved by this means. For example, a beneficially increased dynamic component of the damping force may be achieved if the gap width is reduced over the stroke of the piston element (starting from the neutral state). Hence, with certain variants the second gap width is 25% to 80%, preferably 39% to 61%, more preferably 40% to 60%, of the first gap width. In addition or as an alternative, the first gap width is 0,10 mm to 0,50 mm, preferably 0,19 mm to 0,31 mm, more preferably 0,20 mm to 3 mm0,30 mm, and/or the second gap width is 0,05mm to 0,25 mm, preferably 0,10 mm to 0,16 mm, more preferably 0,11 mm to 0,15 mm;

As noted, the gap length of the radial gap along the axial direction may also be used to tune the magnitude of the dynamic component of the damping force over the stroke of the piston element. It will be appreciated that a change to the gap length essentially linearly influences the dynamic component of the damping force such that a noticeable adjustment may be achieved by this means as well. With certain variants, the radial gap, in the neutral state of the damper unit, has a first gap length along the axial direction. Here, the first gap length may preferably be 40% to 99%, preferably 60% to 81%, more preferably 61% to 80%, of the first gap width. In addition or as an alternative, the first gap length may be 3 mm to 15 mm, preferably 4,9 mm to 8,1 mm, more preferably 5 mm to 8 mm. In any of these cases beneficial values of the dynamic component of the damping force may be achieved.

It will be appreciated that the gap length of the radial gap along the axial direction may remain essentially constant, e.g., by having the piston element already in the neutral state fully plunged in the first compartment. With certain variants the radial gap, in a deflected state of the damper unit where the damper unit exerts the damping force, has a second gap length, wherein this second gap length may be different than the first gap length. With certain beneficial variants, the second gap length may be 10% to 70%, preferably 30% to 50%, more preferably 31% to 49%, of the first gap length. In addition or as an alternative, the second gap length may be 2,5 mm to 17,5mm, preferably 7,5 mm to 12,5 mm, more preferably 7,75 mm to 12,25 mm. These values may be particularly suitable for a specific configuration with a total deflection of 20 mm to 25 mm in normal operation. It will be appreciated that the deflected state of the damper unit again may be the state of maximum deflection of the damper unit achieved during normal operation of the vehicle and the damping arrangement, respectively.

As noted, the damper unit may be configured such that the damping force has a static component resulting from a compression of the damping fluid and a speed-dependent dynamic component resulting from the flow of the damping medium between the first space and the second space through the radial gap. The radial gap may have a gap width in the radial direction and a gap length along the axial direction, wherein the damper unit is configured such that the gap width and the gap length define the speed-dependent dynamic component of the damping force. It will be appreciated that the damper unit may be configured such that the dynamic component has an arbitrary desired course over the stroke of the piston element. For example, depending on the specific vehicle design, the dynamic component may at least partially increase and/or at least partially decrease and/or at least partially stay essentially constant over the stroke of the piston element from the neutral state.

With certain variants, the damper unit may be configured such that the dynamic component of the damping force increases with increasing deflection of the damper unit from a neutral state along the axial direction. In addition or as an alternative, the damper unit may be configured such that the gap length increases with increasing deflection of the damper unit from a neutral state along the axial direction, the gap length, in particular, at least partially increasing step wise and/or at least partially increasing continuously. Similarly, in addition or as an alternative, the damper unit may be configured such that the gap width decreases with increasing deflection of the damper unit from a neutral state along the axial direction, the gap width, in particular, at least partially decreasing step wise and/or at least partially decreasing continuously. In any of these cases a beneficial characteristic of the damping force may be achieved in a simple way.

It will be appreciated that the gap width may be adjusted in any desired and suitable way. Preferably, the piston unit has an outer circumferential surface and the cylinder unit has an inner circumferential surface, wherein the outer circumferential surface and the inner circumferential surface define the radial gap. With certain variants the outer circumferential surface may tapers in the second direction (i.e., in the direction of the deflection of the piston element from the neutral state). In addition or as an alternative, the outer circumferential surface, in a sectional plane including a longitudinal axis of the piston element, may have an at least section-wise polygonal and/or an at least section-wise polygonal sectional contour. In addition or as an alternative, the inner circumferential surface may taper in the second direction. Furthermore, in addition or as an alternative, the inner circumferential surface, in a sectional plane including a longitudinal axis of the cylinder unit, may have an at least section-wise polygonal and/or an at least section-wise polygonal sectional contour. In any of these cases an arbitrary and suitable modification of the gap width may be achieved.

The piston unit may be configured in any suitable and desired way. Preferably, the piston unit comprises a piston rod element located between the piston element and the first interface. Here, the piston rod element may have a smaller diameter than the piston element. This variant may for example be used if it is desired to keep a gap length of the radial gap substantially constant over a certain stroke of the piston element. Preferably, the piston rod element is supported, in particular, slidably supported, by the cylinder unit. In addition or as an alternative, the piston rod element may be supported, in particular, slidably supported, within the working chamber, in particular, adjacent to a transition between a first compartment and a second compartment of the cylinder unit. In addition or as an alternative, the piston rod element may be supported, in particular, slidably supported, adjacent to the piston element. By any of these means a proper support of the piston element may be achieved ensuring a substantially uniform gap width along the circumference of the piston element. In addition or as an alternative, the piston rod element may be supported, in particular, slidably supported, by the damper support unit.

It will be appreciated that, in principle, it may be sufficient that the damper support unit directly supports only one of the piston unit and the cylinder unit. With certain variants the damper support unit may support both the piston unit and the cylinder unit.

The damper support unit may support the piston unit in any desired and suitable way which allows the motion of the piston unit along the axial direction. For example, any desired and suitable parallel guide may be used. With certain variants, the damper support unit supports the piston unit such that the piston unit can move, in particular slide, with respect to the damper support unit along the axial direction. In particular, the damper unit may be configured such that, in a neutral state of the damper unit, the piston unit has a defined pretension in the axial direction against the damper support unit. This has the advantage that the damper unit may already exert a defined elevated damping force (corresponding to the pretension) immediately at the onset of the deflection of the damping unit.

In preferably simple configurations, the damper support unit and the piston unit define a hard stop for the piston unit in the first direction. In certain variants, the piston unit may have a first piston unit stop surface configured to engage a mating second piston unit stop surface of the damper support unit to limit motion of the piston unit in the first direction. In certain variants, the piston unit may have a radial protrusion, in particular a radial collar, forming a first piston unit stop surface configured to engage a mating second piston unit stop surface of the damper support unit to limit motion of the piston unit in the first direction. In any of these variants particularly simple and compact configurations may be achieved.

The damper support unit may support the cylinder unit in any desired and suitable way which allows the motion of the cylinder unit along the axial direction. For example, here as well, any desired and suitable parallel guide may be used. With certain variants, the damper support unit may support the cylinder unit such that the cylinder unit can move, in particular slide, with respect to the damper support unit along the axial direction. In particular, the damper unit may be configured such that, in a neutral state of the damper unit, the cylinder unit has a defined pretension in the axial direction against the damper support unit. This again has the advantage that the damper unit may already exert a defined elevated damping force (corresponding to the pretension) immediately at the onset of the deflection of the damping unit.

In preferably simple configurations, the damper support unit and the cylinder unit define a hard stop for the cylinder unit in the second direction. In certain variants, the cylinder unit may have a first cylinder unit stop surface configured to engage a mating second cylinder unit stop surface of the damper support unit to limit motion of the cylinder unit in the second direction. In certain variants, the cylinder unit may have a radial protrusion, in particular a radial collar or step, forming a first cylinder unit stop surface configured to engage a mating second cylinder unit stop surface of the damper support unit to limit motion of the cylinder unit in the second direction. In any of these variants as well particularly simple and compact configurations may be achieved.

The damper support unit may in principle be configured in any desirable and suitable way. Particularly robust, simple and compact configurations are achieved if the damper support unit comprises a housing unit receiving at least part of the damper unit. It will be appreciated that, in principle, the damper unit may be essentially fully received within said housing unit, and, for example, said first and second vehicle component reaches into said housing unit to interface with said damper unit. With certain variants, the first interface part of the piston unit protrudes from the housing unit in the axial direction and/or the second interface part of the cylinder unit protrudes from the housing unit in the axial direction. This provides a particularly simple interface with the respective first and second vehicle component.

With certain simple and robust variants, the housing unit may have a first bearing section, in particular, a first sliding bearing section, for supporting the piston unit, the first bearing section, in particular, engaging a cylindrical bearing surface of the piston unit. In addition or as an alternative, the housing unit may have a second bearing section, in particular, a second sliding bearing section, for supporting the cylinder unit, the second bearing section, in particular, engaging a cylindrical bearing surface of the cylinder unit.

The resetting of the damper unit to the neutral state may happen by simply reversing the deflection and allowing backflow of the damping fluid from the second space into the first space through the radial gap. This generates a similar dynamic resistance to the return motion as with the initial damping deflection. The resetting motion may be assisted by a spring unit or the like urging the piston unit back to its neutral position. With certain preferred variants, the dynamic resistance against the resetting motion is at least noticeably reduced. This may be achieved in any desired and suitable way allowing reduced resistance backflow of the damping fluid from the second space into the first space. With certain preferred variants, at least one of the piston unit and the cylinder unit may comprise a resetting duct unit, wherein the resetting duct unit is configured to provide reduced flow resistance for a run-back flow of the damping fluid from the second volume back to the first volume during resetting of the damper unit from a deflected state to a neutral state. With preferably, simple configurations, the resetting duct unit may comprise at least one fluid duct for leading the damping fluid from the second volume back to the first volume. In addition or as an alternative, the resetting duct unit may comprise at least one check valve unit located in a fluid duct and allowing passage of the damping fluid from the second volume back to the first volume.

The working chamber may define a closed invariable volume into which the piston unit plunges. Certain preferred variants, however, may comprise a volume compensation unit which is configured to compensate, in particular, in a neutral state of the damper unit, for a change in the density of the damping fluid within the working chamber. Such change in the density of the damping fluid typically is the result of a change in temperature of the damping fluid, as may be the case due to changes in the ambient temperature but also due to the amount of energy introduced into the damping fluid during operation. By this volume compensation unit it can be guaranteed that the change in density is compensated for and that the pressure in the working chamber in the neutral state is kept substantially at a given value, e.g., close to ambient pressure. As a result, the working characteristics of the damper arrangement can be kept in a comparatively narrow tolerance band (preferably substantially constant) despite such temperature variations.

The volume compensation unit may generally be implemented in any desired and suitable way. Preferably, the volume compensation unit comprises at least one compensation duct unit for allowing exchange of damping fluid between the working chamber and a compensation reservoir. This exchange of damping fluid may be allowed and blocked as required. For example, the volume compensation unit may be an active unit comprising a controlled valve unit triggered to connect the working chamber and the compensation reservoir for allowing the exchange of damping fluid. Such triggering may happen upon any temporal events (e.g., at given intervals or the like) or non-temporal events (e.g. at given states of the damper unit, e.g., in the neutral state, or when certain threshold temperatures are reached etc.).

With certain simple, yet very efficient variants, the volume compensation unit comprises at least one compensation valve unit which is located in a fluid duct between the working chamber and a compensation reservoir. The compensation valve unit which allows exchange of damping fluid between the working chamber and the compensation reservoir when the damper unit is in the neutral state and blocking exchange of damping fluid between the working chamber and the compensation reservoir when the damper unit is not in the neutral state. This may be simply achieved in that part of the fluid duct is located in the piston unit such that fluid connection between the working chamber and the compensation reservoir is only made when the piston unit (hence, also the damper unit) is in the neutral state. As the damper unit, during normal operation, regularly assumes its neutral state (e.g., during standstill or travel of the vehicle on a straight track etc.) it can be guaranteed in a very simple way that volume compensation is provided sufficiently regularly.

The compensation reservoir may basically be designed in any desired and suitable way allowing proper volume compensation. It may be held at any desired pressure suiting the desired pressure within the working chamber in the neutral state. Preferably it is a simple chamber substantially at ambient pressure. This may be achieved, for example, by one or more walls of the compensation reservoir being formed by an elastic membrane element contacting ambient air and allowing the compensation reservoir to breathe substantially at ambient pressure during volume compensation operation.

The damping fluid may be any desired and suitable damping fluid providing the desired damping properties. Preferably, the damping fluid is a viscous compressible fluid. In addition or as an alternative, the damping fluid may be at least one of a silicone fluid and a silicone oil. Preferably, the damping fluid exhibits a compressibility of 1% to 7%, preferably 2% to 3,1%, more preferably 2,1% to 3%, at room temperature and a pressure of 300 bar. It will be appreciated however that, with other variants, the pressure may be considerably increased, in particular, essentially doubled, i.e., to 600 bar. In addition or as an alternative, the damping fluid may exhibit a substantially linear increase in compressibility over pressure at room temperature. In that case, the above compressibility values increase accordingly. In any of these variants alone or in arbitrary combination particularly simple and reliable damping may be achieved.

The present invention further relates to a rail vehicle unit comprising a rail vehicle structure and at least one damper arrangement according to the invention, wherein the damper support unit is connected to the rail vehicle structure forming the third vehicle component. With such a rail vehicle unit the above variants and advantages can be achieved to the same extent, such that reference is made to the explanations given above.

The damper unit may, in principle, be used for any desired purpose. For example, it may be used as a longitudinal damper damping motions along a longitudinal direction of the vehicle, or it may be a vertical damper damping motions along a height direction of the vehicle. Preferably, the at least one damper unit is a transverse damper unit of the rail vehicle unit with the axial direction, in particular, having at least a component along a transverse axis of the rail vehicle unit. With certain preferred variants, the at least one damper unit is a rotational damper unit of the rail vehicle unit with the damping force damping a rotational motion between the a rail vehicle structure and a further rail vehicle structure about a rotation axis, in particular a rotation axis extending along a height direction of the rail vehicle unit.

It will be appreciated that the at least one damper unit may be arranged at any suitable location within the vehicle. Particularly favorably configurations are achieved if the at least one damper unit is located at least substantially centrally along a transverse axis of the rail vehicle unit. It will be appreciated that one single damper unit may be sufficient to achieve the desired damping. Preferably, at least one further damper arrangement according to the invention may be provided. Here, preferably, the damper arrangements are spaced along a longitudinal axis of the rail vehicle unit.

It will be appreciated that the damper arrangement may act between any desired two components of the rail vehicle unit. With certain variants, the rail vehicle structure is a running gear unit, in particular, a frame unit of the running gear unit, and at least one of the first vehicle component and the second vehicle component is a component of a wagon body unit supported on the running gear unit. In an alternative, the rail vehicle structure is a wagon body unit and at least one of the first vehicle component and the second vehicle component is a component of a running gear unit supporting the wagon body unit.

The invention is explained in greater detail below with reference to embodiments as shown in the appended Figures.

### BRIEF DESCRIPTION OF THE DRAWINGS

- Figure 1: is a schematic side view of a part of a preferred embodiment of a rail vehicle unit according to the present invention with a preferred embodiment of a damper arrangement according to the present invention;
- Figure 2: is a schematic partially sectional view of the damper arrangement of Figure 1 along line II-II of Figure 1.
- Figure 3: is a schematic sectional view of the damper arrangement of Figure 2 in a first deflected state.
- Figure 4: is a schematic sectional view of the damper arrangement of Figure 2 in a second deflected state.
- Figure 5: is a schematic sectional view of a part of the rail vehicle unit of Figure 1 along line V-V of Figure 1.
- Figure 6: is a schematic sectional view of detail VI of the damper arrangement of Figure 2.
- Figure 7: is a schematic sectional view of a detail of a further preferred embodiment of a damper arrangement according to the present (corresponding to the view of Figure 6).

### DETAILED DESCRIPTION OF THE INVENTION

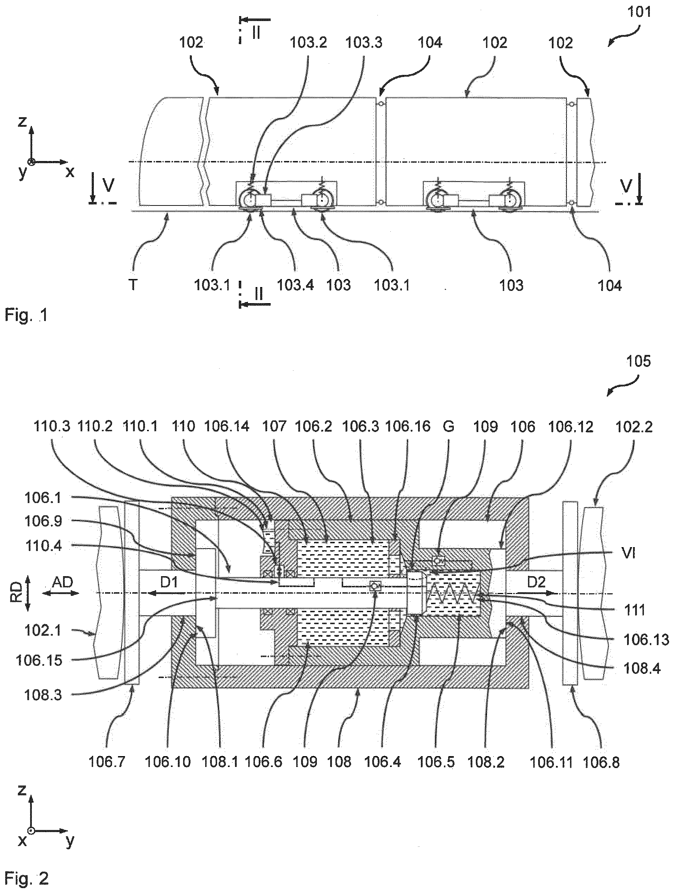

With reference to Figures 1 to 7 preferred embodiments of a rail vehicle unit 101 according to the present invention comprising a preferred embodiment of a damper arrangement according to the invention will now be described in greater detail.

In order to simplify the explanations given below, an xyz-coordinate system has been introduced into the Figures, wherein (on a straight, level track T) the x-axis designates the longitudinal axis (or direction, respectively) of the rail vehicle 101, the y-axis designates the transverse axis (or direction, respectively) of the rail vehicle 101 and the z-axis designates the height axis (or direction, respectively) of the rail vehicle 101 (the same, of course, applies for the running gear 102). It will be appreciated that all statements made in the following with respect to the position and orientation of components of the rail vehicle, unless otherwise stated, refer to a static situation or state of the rail vehicle 101 with the rail vehicle 101 standing on a straight level track under nominal loading.

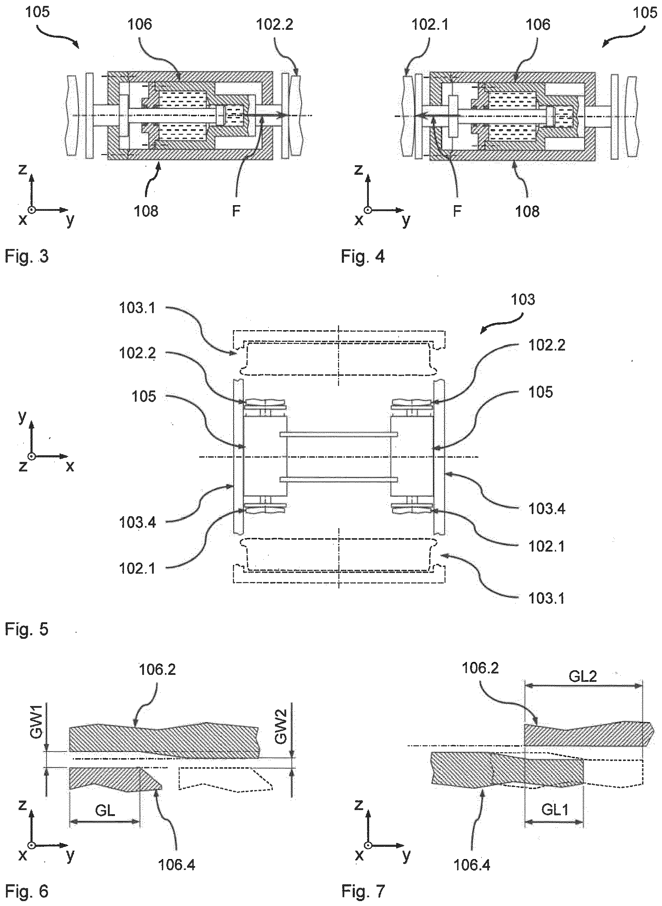

The vehicle 101 is a low floor light rail vehicle (LRV) such as a tramway or the like. The vehicle 101 comprises a series wagon bodies 102 each supported by a suspension system on a running gear 103 and articulated via articulations 104. The running gear 103 comprises four wheel units 103.1 supporting a vehicle structure in the form of the respective wagon body 102. Each wheel unit 103.1 supports the wagon body 102 via a suspension unit 103.2. As can be seen from Figure 1 and 5, each two wheel units 103.1 associated in the transverse direction are linked via a (generally rectangular) frame unit 103.4.

In the present example, each of the wheel units 103.1 is a motorized wheel unit driven by a drive unit 103.3 which typically includes a motor and an associated gearbox. Of course, with certain variants, one motor may drive more than one wheel unit 103.1 via a corresponding gears etc. Similarly, with other variants, some or all of the wheel units 103.1 may be non-motorized.

As can be seen, in particular, from Figure 2 and 5, each frame unit 103.4 carries two damper arrangements 105 comprising a damper unit 106, wherein the damper unit 106 comprises a piston unit 106.1 and a cylinder unit 106.2 defining an axial direction AD and a radial direction RD. The cylinder unit 106.2 comprises a sealingly closed working chamber 106.3 which is filled with a damping fluid 107. The working chamber 106.3 axially slidably receives a piston element 106.4 of the piston unit 106.1, wherein the piston element 106.4 separates the working chamber 106.3 in a first space 106.5 and a second space 106.6.

The piston unit has a first interface part 106.7 which forms a first interface of the damper unit 106 to a first vehicle component 102.1 of the rail vehicle 101 and which faces away from the cylinder unit 106.2. Similarly, the cylinder unit 106.2 has a second interface part 106.8 which forms a second interface of the damper unit 106 to a second vehicle component 102.2 of the rail vehicle 101 and which faces away from the piston unit 106.1. The first and second vehicle component 102.1, 102.2 are arms of the wagon body 102 protruding downwards from the wagon body 102 towards the track T.

A damper support unit in the form of a housing 108 is connected to the frame unit 103.4 and supports the damper unit 106. Hence, the damper unit 106 provides a damping force F damping a relative motion between the frame unit 103.4 (forming a third vehicle component) and the first vehicle component 102.1 and the second vehicle component 102.2 along the axial direction AD. It will be appreciated that the damper unit 106 is therefore a part of a yaw damper arrangement (or rotational damper arrangement) which damps a yaw motion of the wagon body 102 with respect to the running gear 103 about a yaw axis (or rotation) axis extending in the height direction of the vehicle 101.

The damper support unit 108 restricts motion of the piston unit 106.1 with respect to the damper support unit 108 in a first direction D1 along the axial direction AD while allowing motion of the piston unit 106.1 in an opposite second direction D2 along the axial direction AD. Similarly, the damper support unit 108 further restricts motion of the cylinder unit 106.2 with respect to the damper support unit 108 in the second direction D2 while allowing motion of the cylinder unit 106.2 in the first direction D1.

In the present example, a very simple configuration is achieved in that the damper support unit 108 and the piston unit 106.1 define a hard stop for the piston unit 106.1 in the first direction D1. To this end, the piston unit 106.1 forms a first piston unit stop surface 106.9 configured to engage a mating second piston unit stop surface 108.1 of the damper support unit 108 to limit motion of the piston unit in the first direction D1. In the present example, the piston unit 106.1 has a radial protrusion 106.10 (here a radial collar) forming the first piston unit stop surface 106.9 engaging the mating second piston unit stop surface 108.1 of the damper support unit 108 to limit motion of the piston unit 106.1 in the first direction D1. By this means a particularly simple and compact configuration is achieved.

Similarly, the damper support unit 108 and the cylinder unit 106.2 define a hard stop for the cylinder unit 106.3 in the second direction D2. To this end, the damper support unit 108 and the cylinder unit 106.2 define a hard stop for the cylinder unit 106.2 in the second direction D2. In the present example, the cylinder unit 106.2 has a first cylinder unit stop surface 106.11 engaging a mating second cylinder unit stop surface 108.2 of the damper support unit 108 to limit motion of the cylinder unit 106.2 in the second direction D2. In the present example, the cylinder unit 106.2 has a radial protrusion 106.12 (here a radial step or collar), forming the first cylinder unit stop surface 106.11 engaging the mating second cylinder unit stop surface 108.2 of the damper support unit 108 to limit motion of the cylinder unit 106.2 in the second direction D2. By this means a particularly simple and compact configuration is achieved here as well.

The piston element 106.4 defines a radial gap G with respect to the cylinder unit 106.2 in the radial direction RD. The radial gap G restricts flow of the damping medium 107 between the first space 106.5 and the second space 106.6 when the damping unit 106 is deflected from the neutral state (shown in Figure 2) in order to provide a defined dynamic characteristic of the damping force F which is dependent on a speed of a relative motion between of the piston element 106.4 and the cylinder unit 106.2 along the axial direction.

Hence, by executing the damper arrangement 105 as a fluid damper arrangement with a damping force F that has a (quasi) static force component FS stemming from the compression of a damping fluid 107 and a dynamic force component FD stemming from a restricted flow of the damping medium 107 through the radial gap G between the piston element 106.4 and the cylinder unit 106.2. This has the great advantage that the dynamic force component FD can be configured or adjusted in a manner which is essentially independent from the configuration of the static force component FS. This adds a considerable degree of freedom to the layout which enables smoother build-up of the damping force F in less curved tracks (which result in comparatively low yaw speeds) while enabling appropriately rapid build-up of considerable damping forces in more pronouncedly curved tracks (which result in comparatively high yaw speeds).

By this means, proper rotational damping may be achieved as the latter is especially relevant or critical with a light rail vehicle 101 which, as in the present case, has a so called multi-articulation configuration, where a series of wagon bodies 102 are articulated to each other with each of them only supported on a single running gear 103. Here, proper yaw or rotation damping is critical to make sure that the respective wagon body 102 will yaw smoothly when entering a curved track section of the track T. Other than with conventionally used layered rubber-metal elements a non-linear damping force to stroke characteristic may be achieved which yields better results in passenger comfort and derailment safety.

Moreover, the present configuration with the damper support unit 108 allows use of the interfaces 106.7, 106.8 of the damper unit 106 to both interface with the wagon body 102 to damp motions between the wagon body 102 and the running gear 103 in opposite directions (see Figures 3 and 4) yet always using the same deflection of the damper unit 106 from its neutral state (see Figure 2). In particular, as will be explained further below, this allows implementing a configuration where return of the damping unit 106 to its neutral state is greatly facilitated in that the dynamic force FD component is considerably reduced by bypassing the flow restriction for the damping fluid 107 formed by the radial gap G.

As can be seen, in particular, from Figure 2, the working chamber 106.3 comprises a first compartment 106.13 and a second compartment 106.14, wherein the piston element 106.4, in the neutral state of the damper unit 106, is located in the area of a transition between the first compartment 106.13 and the second compartment 106.14. By this means it is possible, for example, that the diameter of the second compartment 106,14 is larger than the diameter of the first compartment 106.13. As will be explained further below, this can be used to have an axial length AL of the radial gap G vary as the piston element 106.4 increasingly plunges into the first compartment 106.13, thereby varying the flow resistance provided by the radial gap G (see Figure 7).

In the present example, the radial gap G is formed between a wall of the first compartment 106.13 and the piston element 106.4. The radial gap G has a gap width GW in the radial direction RD (see Figure 6). In the present example, the first compartment 106.13 has a first diameter CD1 and the second compartment 106.14 has a second diameter CD2, wherein the first diameter CD1 may be 20% to 39%, preferably 51% to 70%, more preferably 40% to 50%, of the second diameter CD2. Moreover, in the neutral state of the damper unit 106, the first space 106.5 has a first volume V1 and the second space 106.2 has a second volume V2, wherein the first volume V1 may be 10% to 24%, preferably 36% to 60%, more preferably 25% to 35%, of the second volume V2. In any of these cases beneficial flow properties and pressure propagation may be achieved during operation of the damping unit 106.

It will be appreciated that the gap width GW may stay essentially constant during operation, i.e., the gap width GW may be at least substantially constant along the axial direction AD, i.e., over the axial AL of the radial gap G. With certain beneficial variants, the radial gap G, in the neutral state of the damper unit 106, has a first gap width GW1 in the radial direction RD, while the radial gap G, in a deflected state of the damper unit 106 (where the damper unit exerts the damping force F) has a second gap width GW2 which may be different from the first gap width GW1. It will be appreciated that the deflected state of the damper unit 106 may be the state of maximum deflection of the damper unit 106 achieved during normal operation of the vehicle 101 and the damping arrangement 105, respectively.

By this variation of the gap width GW it is possible to tune the magnitude of the dynamic component FD of the damping force F over the stroke of the piston element 106.4. It will be appreciated that a change to the gap width GW influences the dynamic component FD of the damping force by the third power such that a considerable adjustment may be achieved by this means. For example, a beneficially increased dynamic component FD of the damping force F may be achieved if the gap width-GW is reduced over the stroke of the piston element 106.4 (starting from the neutral state). Hence, with certain variants the second gap GW2 width is 25% to 80%, preferably 39% to 61%, more preferably 40% to 60%, of the first gap width GW1. Particularly beneficial configurations may be achieved is if the first gap width GW1 is 0,10 mm to 0,50 mm, preferably 0,19 mm to 0,31 0mm, more preferably 0,20 mm to 3 mm0,30 mm, and/or the second gap width GW2 is 0,05mm to 0,25 mm, preferably 0,10 mm to 0,16 mm, more preferably 0,11 mm to 0,15 mm.

As noted, the gap length GL of the radial gap G along the axial direction may also be used to tune the magnitude of the dynamic component FD of the damping force F over the stroke of the piston element 106.4. It will be appreciated that a change to the gap length GL essentially linearly influences the dynamic component FD of the damping force F such that a noticeable adjustment may be achieved by this means as well. With certain variants, the radial gap G, in the neutral state of the damper unit 106, has a first gap length GL1 along the axial direction. Here, the first gap length GL1 may preferably be 40% to 99%, preferably 60% to 81%, more preferably 61% to 80%, of the first gap width. Furthermore, the first gap length GL1 may be 3 mm to 15 mm, preferably 4,9 mm to 8,1 mm, more preferably 5 mm to 8 mm. In any of these cases beneficial values of the dynamic component of the damping force may be achieved.

It will be appreciated that the gap length of the radial gap along the axial direction may remain essentially constant (i.e., GL1 = GL = const.). As with the present example, this may be achieved, e.g., by having the piston element 106.4 already in the neutral state fully plunged in the first compartment 106.13.

With certain variants (see Figure 7), the radial gap G, in a deflected state of the damper unit 106 (where the damper unit exerts the damping force F), has a second gap length GL2, wherein this second gap length GL2 is different than the first gap length GL1 (see dashed contour in Figure 7). With certain beneficial variants, the second gap length GL2 may be 10% to 70%, preferably 30% to 50%, more preferably 31% to 49%, of the first gap length GL1. Moreover, the second gap length LG2 may be 2,5 mm to 17,5mm, preferably 7,5 mm to 12,5 mm, more preferably 7,75 mm to 12,25 mm. These values may be particularly suitable for a specific configuration with a total deflection of 20 mm to 25 mm in normal operation. It will be appreciated that the deflected state of the damper unit 106 again may be the state of maximum deflection of the damper unit 106 achieved during normal operation of the vehicle 101 and the damping arrangement 105, respectively. As shown in Figure 7, such a configuration may be achieved if the piston element 106.4 in the neutral state (see solid contour in Figure 7) is not fully plunged into the first compartment 106.13.

As noted above, the damper unit 106 may be configured such that the damping force F has a static component FS resulting from a compression of the damping fluid 107 and a speed-dependent dynamic component FD resulting from the flow of the damping medium 107 between the first space 106.5 and the second space 106.6 through the radial gap G. The gap width GW and a gap length GL define the speed-dependent dynamic component FD of the damping force F. It will be appreciated that the damper unit 106 may be configured such that the dynamic component FD has an arbitrary desired course over the stroke of the piston element 106.4. For example, depending on the specific vehicle design, the dynamic component FD may at least partially increase and/or at least partially decrease and/or at least partially stay essentially constant over the stroke of the piston element 106.4 from the neutral state (shown in Figure 2).

With certain variants, the damper unit 106 may be configured such that the dynamic component FD of the damping force F increases with increasing deflection of the damper unit 106 from the neutral state along the axial direction AD. As shown above, the damper unit 106 may be configured such that the gap length GL increases with increasing deflection of the damper unit 106 from the neutral state along the axial direction AD, the gap length, in particular, at least partially increasing step wise (e.g., by a piston element with one or more spaced grooves - not shown) and/or at least partially increasing continuously (see e.g., Figure 7). Similarly, the damper unit 106 may be configured such that the gap width GW decreases with increasing deflection of the damper unit 106 from the neutral state along the axial direction (see Figure 6), the gap width GW, in particular, at least partially decreasing step wise (e.g., by a stepped surface if the cylinder unit 106.2) and/or at least partially decreasing continuously. In any of these cases a beneficial characteristic of the damping force F may be achieved in a simple way.

It will be appreciated that the gap width GW may be adjusted in any desired and suitable way. Preferably, the piston unit 106.1 has an outer circumferential surface and the cylinder unit 106.2 has an inner circumferential surface, wherein the outer circumferential surface and the inner circumferential surface define the radial gap G. With certain variants the outer circumferential surface tapers in the second direction D2 (i.e., in the direction of the deflection of the piston element from the neutral state - see Figure 7). For example, the outer circumferential surface, in a sectional plane including a longitudinal axis of the piston element 106.4, may have an at least section-wise polygonal and/or an at least section-wise polygonal sectional contour (see Figure 7). In addition or as an alternative, the inner circumferential surface of the cylinder unit 106.2 may taper in the second direction (see Figure 6). Furthermore, the inner circumferential surface of the cylinder unit 106.2, in a sectional plane including a longitudinal axis of the cylinder unit 106.2, may have an at least section-wise polygonal and/or an at least section-wise polygonal sectional contour (see Figure 6). In any of these cases an arbitrary and suitable modification of the gap width may be achieved.

It will be appreciated that the piston unit 106.1 may be configured in any suitable and desired way. Preferably, as with the present example, the piston unit 106.1 comprises a piston rod element 106.15 located between the piston element 106.4 and the first interface 106.7. As with the present example, the piston rod element 106.15 may have a smaller diameter than the piston element 106.4. As explained, such a variant may be used if it is desired to keep a gap length GL of the radial gap G substantially constant over a certain stroke of the piston element 106.4.

In the present example, the piston rod element 106.15 is sealingly and slidably supported by the cylinder unit 106.2. In addition, as in the present example, the piston rod element 106.15 may be slidably supported by a support element 106.16 within the working chamber 106.3, for example, adjacent to a transition between the first compartment 106.13 and the second compartment 106.14 of the cylinder unit 106.2 as well as adjacent to the piston element 106.4: By any of these means a proper support of the piston element 106.4 may be achieved ensuring a substantially uniform gap width GW along the circumference of the piston element 106.4. In addition, as with the present example, the piston rod element may also be supported, in particular, slidably supported, by the damper support unit 108.

The damper support unit 108 may support the cylinder unit 106.2 in any desired and suitable way which allows the motion of the cylinder unit 106.2 along the axial direction AD. For example, here as well, any desired and suitable parallel guide may be used. In the present example, the damper support unit 1085 supports the cylinder unit 106.2 such that the cylinder unit 106.2 can slide with respect to the damper support unit 108 along the axial direction AD.

In the present example, the damper unit 106 is configured such that, in the neutral state of the damper unit 106, both the piston unit 106.1 and the cylinder unit 106.2 have a defined pretension in the axial direction against the damper support unit 108. This has the advantage that the damper unit 106 may already exert a defined elevated damping force F (corresponding to the pretension) immediately at the onset of the deflection of the damping unit 106.

The damper support unit 108 may in principle be configured in any desirable and suitable way. In the present example, a particularly robust, simple and compact configuration is achieved in that the damper support unit 108 is formed as a housing unit receiving part of the damper unit 106. It will be appreciated that, in principle, the damper unit may be essentially fully received within the housing unit, and, for example, said first and second vehicle component 102.1, 102.2 may reach into the housing unit to interface with the damper unit 106. In the present example, the first interface part 106.7 of the piston unit 106.1 protrudes from the housing unit 108 in the axial direction AD. Similarly, the second interface part 106.8 of the cylinder unit 106.2 protrudes from the housing unit 108 in the axial direction AD. This provides a particularly simple interface with the respective first and second vehicle component 102.1, 102.2.

The present example yields a simple and robust configuration in that the housing unit has a first sliding bearing section 108.3 for supporting the piston unit 106.1. The first bearing section 108.3 engages a cylindrical bearing surface of the piston unit 106.1. In addition, the housing unit 108 has a second sliding bearing section 108.4 for supporting the cylinder unit, the second bearing section 108.4 engaging a cylindrical bearing surface of the cylinder unit 106.2.

As already mentioned above, the resetting of the damper unit 106 to the neutral state may happen by simply reversing the deflection and allowing backflow of the damping fluid 107 from the second space 106.6 into the first space 106.5 through the radial gap G. This generates a similar dynamic resistance to the return motion of the damping unit 106 as with the initial damping deflection.

With certain preferred variants, the dynamic resistance against the resetting motion is at least noticeably reduced. This may be achieved in any desired and suitable way allowing reduced resistance backflow of the damping fluid from the second space into the first space. In the present variant, at least one of the piston unit 106.1 and the cylinder unit 106.2 may comprise a resetting duct unit 109, wherein the resetting duct unit 109 is configured to provide reduced flow resistance for a run-back flow of the damping fluid 107 from the second space 106.6 (or volume) back to the first space 106.5 (or volume) during resetting of the damper unit 106 from a deflected state to the neutral state. With preferably simple configurations, the resetting duct unit 109 comprises at least one fluid duct for leading the damping fluid from the second space 106.6 (or volume) back to the first space 106.5 (or volume). Here, the resetting duct unit 109 may comprise at least one check valve unit located in the fluid duct and allowing passage of the damping fluid 107 from the second space 106.6 (or volume) back to the first space 106.5 (or volume).

It will be appreciated that the working chamber 106.3 may define a closed invariable volume into which the piston unit 106.1 plunges. In the present example, however, the damper unit 106 further comprises a volume compensation unit 110 which is configured to compensate, in a neutral state of the damper unit 106, for a change in the density of the damping fluid within the working chamber. Such change in the density of the damping fluid typically is the result of a change in temperature of the damping fluid 107, as may be the case due to changes in the ambient temperature but also due to the amount of energy introduced into the damping fluid 107 during operation. By this volume compensation unit it can be guaranteed that this change in density is compensated for and that the pressure in the working chamber 106.3 in the neutral state is kept substantially at a given value, such as close to ambient pressure as in the present example. As a result, the working characteristics of the damper arrangement 105 can be kept in a comparatively narrow tolerance band (preferably substantially constant) despite such temperature variations.

It will be appreciated that the volume compensation unit 110 may generally be implemented in any desired and suitable way. In the present example, the volume compensation unit 110 comprises a compensation duct unit 110.1 which extends from the working chamber 106.3 through the piston unit 106.1 and the cylinder unit 106.2 to the compensation reservoir 110.2. The compensation duct unit 110:1, in given states, allows exchange of damping fluid 107 between the working chamber 106.3 and a compensation reservoir 110.2.

To this end, the compensation duct unit 110.1 comprises a compensation valve unit 110.3 which is located in a fluid duct between the working chamber 106.3 and the compensation reservoir 110.2. The compensation valve unit 110.3 allows exchange of damping fluid 107 between the working chamber 106.3 and the compensation reservoir 110.2 when the piston unit 106.1 and, hence, the damper unit 106, is in the neutral state as shown in Figure 2. In any other noticeably deflected state of the piston unit 106.1 exchange of damping fluid 107 between the working chamber 106.3 and the compensation reservoir 110.2 is blocked. This is simply achieved in that a (working chamber side) part 110.4 of the fluid duct of the compensation duct unit 110.1 is located in the piston unit 106.1 such that fluid connection between the working chamber 106.3 and the compensation reservoir 110.2 is only made when the piston unit 106.1 is in the neutral state (as shown). As the damper unit 106, during normal operation, regularly assumes its neutral state (e.g., during standstill or travel of the vehicle 101 on a straight track T etc.) it can be guaranteed in a very simple way that volume compensation is provided sufficiently regularly.

It will be appreciated, however, that with other variants, the volume compensation unit 110 may be an active unit comprising a controlled valve unit (instead of valve unit 110.3) triggered to connect the working chamber 106.3 and the compensation reservoir 110.2 for allowing the exchange of damping fluid 107. In that case, the (working chamber side) part 110.4 of the fluid duct of the compensation duct unit 110.1 would not extend in the piston unit 106.1 but would simply extend in the cylinder unit 106.2 as well. As previously noted, such triggering may happen upon any temporal events (e.g., at given intervals or the like) or non-temporal events (e.g. at given states of the damper unit, e.g., in the neutral state, or when certain threshold temperatures are reached and detected, respectively, in the damping fluid 107 etc.).

It will be appreciated that the compensation reservoir 110.2 may basically be designed in any desired and suitable way allowing proper volume compensation. The compensation reservoir 110.2 may be held at any desired pressure suiting the desired pressure within the working chamber 106.3 in the neutral state. In the present example, it is a simple chamber substantially at ambient pressure. This is achieved in that one or more walls of the compensation reservoir 110.2 are formed by an elastic membrane element contacting ambient air and allowing the compensation reservoir 110.2 to breathe substantially at ambient pressure during the volume compensation operation. In order to ensure that the piston unit 106.1 and the cylinder unit 106.2 reliably return to their neutral state, a spring unit 111 is provided. The spring unit 111 acts between the piston unit 106.1 and the cylinder unit 106.2 to urge the piston unit 106.1 and the cylinder unit 106.2 back to their neutral state.

It will be appreciated that, as noted, the damping fluid 107 may be any desired and suitable damping fluid providing the desired damping properties. Preferably, the damping fluid 107 is a viscous compressible fluid. For example, the damping fluid 107 may be at least one of a silicone fluid and a silicone oil. Preferably, the damping fluid 107 exhibits a compressibility of 1% to 7%, preferably 2% to 3,1%, more preferably 2,1% to 3%, at room temperature and a pressure of 300 bar. In addition or as an alternative, the damping fluid 107 may exhibit a substantially linear increase in compressibility over pressure at room temperature. In any of these variants alone or in arbitrary combination particularly simple and reliable damping may be achieved.

As noted above, the damper unit 106 may, in principle, be used for any desired purpose. For example, it may be used as a longitudinal damper damping motions along a longitudinal direction of the vehicle 101, or it may be a vertical damper damping motions along a height direction of the vehicle 101.

In the present example, the damper unit 106 is a transverse damper unit and rotational damper unit, respectively, with the axial direction AD, in the neutral state, extending along a transverse axis of the rail vehicle 101. Here, the damper unit 106 acts as a rotational damper unit of the rail vehicle 101 with the damping force F damping a rotational motion between the a wagon body 102 and the running gear 103 about a rotation axis or yaw axis extending along a height direction of the rail vehicle 101. It will be appreciated, however, that with other variants, longitudinal and/or rotational damping may be achieved if a damper unit 106 is arranged laterally (i.e., on one or each of the vehicle sides) such that its axial direction AD, in the neutral state, extends along a longitudinal axis of the rail vehicle 101.

It will be appreciated that the damper unit 106 may be arranged at any suitable location within the vehicle 101. Particularly favorable configurations are achieved if, as with the present example, the damper unit 106 is located at least substantially centrally along a transverse axis of the rail vehicle 101. It will be appreciated that one single damper unit 106 may be sufficient to achieve the desired damping. Preferably, as with the present example (see Figure 5), a further damper arrangement 105 according to the invention is provided. Here, the damper arrangements 105 are spaced along a longitudinal axis of the rail vehicle 101, one damper arrangement 105 mounted to a leading part of the frame unit 103.4, one damper arrangement 105 mounted to a trailing part of the frame unit 103.4. As shown in Figure 5, the housing units 108 of the damper arrangements 105 may be connected in the longitudinal direction of the rail vehicle 101 to provide a particularly robust yet lightweight configuration.

While the present invention, in the foregoing, has been mainly described in the context of a single or individual wheel unit, it will be appreciated that the invention may also be used in any other wheel configuration, e.g. in the context of wheel pairs or wheel sets with a torsionally rigid coupling between the wheel units.

While the present invention, in the foregoing has been exclusively described in the context of light rail vehicles, it will be appreciated that the invention can also be applied for any other rail vehicles, in particular, other rail vehicles operating at considerably higher nominal speeds.

## Claims

1. A damper arrangement for a rail vehicle (101), in particular, a light rail vehicle, comprising
- a damper unit (106),
wherein
- said damper unit (106) comprises a piston unit (106.1) and a cylinder unit (106.2) defining an axial direction and a radial direction;
- said cylinder unit (106.2) comprises a sealingly closed working chamber (106.3) filled with a damping fluid (107) and axially slidably receiving a piston element of said piston unit (106.1);
- said piston element separates said working chamber (106.3) in a first space (106.5) and a second space (106.6);
- said piston unit (106.1) has a first interface part (106.7) forming a first interface of said damper unit (106) to a first vehicle component (102.1) of said rail vehicle and facing away from said cylinder unit (106.2);
- said cylinder unit (106.2) has a second interface part (106.8) forming a second interface of said damper unit (106) to a second vehicle component (102.1) of said rail vehicle and facing away from said piston unit (106.1);
**characterized in that**
- a damper support unit (108) supports said damper unit (106),
- said damper unit (106) is configured to provide a damping force damping a relative motion between a third vehicle component (103.4) connected to said damper support unit (108) and at least one of said first vehicle component (102.1) and said second vehicle component (102.1) along said axial direction;
- said damper support unit (108) restricts motion of said piston unit (106.1) with respect to said damper support unit (108) in a first direction along said axial direction while allowing motion of said piston unit (106.1) in an opposite second direction along said axial direction;
- said damper support unit (108) restricts motion of said cylinder unit (106.2) with respect to said damper support unit (108) in said second direction while allowing motion of said cylinder unit (106.2) in said first direction;
- said piston element (106.4) defines a radial gap (G) with respect to said cylinder unit (106.2) in said radial direction, said radial gap (G) restricting flow of said damping medium between said first space (106.5) and said second space (106.6) in order to provide a defined dynamic characteristic of said damping force which is dependent on a speed of a relative motion between of said piston element (106.4) and said cylinder unit (106.2) along said axial direction.

2. The damper arrangement according to claim 1, wherein
- said working chamber (106.3) comprises a first compartment (106.13) and a second compartment (106.14),
- said piston element (106.4), in a neutral state of said damper unit (106), being located in the area of a transition between said first compartment (106.13) and said second compartment (106.14),
wherein, in particular, at least one of
- said radial gap (G) is formed between a wall of said first compartment (106.13) and said piston element (106.4);
- said first compartment (106.13) has a first diameter and said second compartment (106.14) has a second diameter, said first diameter being 20% to 39%, preferably 51% to 70%, more preferably 40% to 50%, of said second diameter;
- in said neutral state of said damper unit (106), said first space (106.5) has a first volume and said second space (106.6) has a second volume, said first volume being 10% to 24%, preferably 36% to 60%, more preferably 25% to 35%, of said second volume.

3. The damper arrangement according to claim 1 or 2, wherein
- said radial gap (G), in a neutral state of said damper unit (106), has a first gap width in said radial direction, and
- said radial gap (G), in a deflected state of said damper unit (106) where said damper unit (106) exerts said damping force, has a second gap width,
wherein, in particular, at least one of
- said second gap width is 25% to 80%, preferably 39% to 61%, more preferably 40% to 60%, of said first gap width;
- said first gap width is 0,10 mm to 0,50 mm, preferably 0,19 mm to 0,31 0mm, more preferably 0,20mm to 0,30mm;
- said second gap width is 0,05mm to 0,25 mm, preferably 0,10 mm to 0,16 mm, more preferably 0,11 mm to 0,15 mm;
- said first gap width is at least substantially constant along said axial direction.

4. The damper arrangement according to any one of the preceding claims, wherein
- said radial gap (G), in said neutral state of said damper unit (106), has a first gap length along said axial direction,
wherein at least one of
- said first gap length is 40% to 99%, preferably 60% to 81%, more preferably 61% to 80%, of said first gap width;
- said first gap length is 3 mm to 15 mm, preferably 4,9 mm to 8,1 mm, more preferably 5 mm to 8 mm.

5. The damper arrangement according to claim 5, wherein
- said radial gap (G), in a deflected state of said damper unit (106) where said damper unit (106) exerts said damping force, has a second gap length,
wherein at least one of
- said second gap length is 10% to 70%, preferably 30% to 50%, more preferably 31% to 49%, of said first gap length;
- said second gap length is 2,5 mm to 17,5mm, preferably 7,5 mm to 12,5 mm, more preferably 7,75 mm to 12,25 mm.

6. The damper arrangement according to any one of the preceding claims, wherein
- said damper unit (106) is configured such that said damping force has a static component resulting from a compression of said damping fluid (107) and a speed-dependent dynamic component resulting from said flow of said damping medium between said first space (106.5) and said second space (106.6) through said radial gap (G),
- said radial gap (G) has a gap width in said radial direction and a gap length along said axial direction,
- said damper unit (106) is configured such that said gap width and said gap length define said speed-dependent dynamic component of said damping force,
wherein, in particular, at least one of
- said damper unit (106) is configured such that said dynamic component of said damping force increases with increasing deflection of said damper unit (106) from a neutral state along said axial direction;
- said damper unit (106) is configured such that said gap length increases with increasing deflection of said damper unit (106) from a neutral state along said axial direction, said gap length, in particular, at least partially increasing step wise and/or at least partially increasing continuously;
- said damper unit (106) is configured such that said gap width decreases with increasing deflection of said damper unit (106) from a neutral state along said axial direction, said gap width, in particular, at least partially decreasing step wise and/or at least partially decreasing continuously.

7. The damper arrangement according to any one of the preceding claims, wherein
- said piston unit (106.1) has an outer circumferential surface and said cylinder unit (106.2) has an inner circumferential surface, said outer circumferential surface and said inner circumferential surface defining said radial gap (G),
wherein, in particular, at least one of
- said outer circumferential surface tapers in said second direction;
- said outer circumferential surface, in a sectional plane including a longitudinal axis of said piston element (106.4), has an at least section-wise polygonal and/or an at least section-wise polygonal sectional contour;
- said inner circumferential surface tapers in said second direction;
- said inner circumferential surface, in a sectional plane including a longitudinal axis of said cylinder unit (106.2), has an at least section-wise polygonal and/or an at least section-wise polygonal sectional contour.

8. The damper arrangement according to any one of the preceding claims, wherein
- said piston unit (106.1) comprises a piston rod element (106.15) located between said piston element (106.4) and said first interface
wherein, in particular, at least one of
- said piston rod element (106.15) has a smaller diameter than said piston element (106.4);
- said piston rod element (106.15) is supported, in particular, slidably supported, by said cylinder unit (106.2);
- said piston rod element (106.15) is supported, in particular, slidably supported, within said working chamber (106.3), in particular, adjacent to a transition between a first compartment (106.13) and a second compartment (106.14) of the cylinder unit (106.2);
- said piston rod element (106.15) is supported, in particular, slidably supported, adjacent to said piston element (106.4);
- said piston rod element (106.15) is supported, in particular, slidably supported, by said damper support unit (108).

9. The damper arrangement according to any one of the preceding claims, wherein
- said damper support unit (108) supports said piston unit (106.1) such that said piston unit (106.1) can move, in particular slide, with respect to said damper support unit (108) along said axial direction,
wherein, in particular, at least one of
- said damper unit (106) is configured such that, in a neutral state of said damper unit (106), said piston unit (106.1) has a defined pretension in said axial direction against said damper support unit (108);
- said damper support unit (108) and said piston unit (106.1) define a hard stop for said piston unit (106.1) in said first direction;
- said piston unit (106.1) has a first piston unit stop surface configured to engage a mating second piston unit stop surface of said damper support unit (108) to limit motion of said piston unit (106.1) in said first direction;
- said piston unit (106.1) has a radial protrusion, in particular a radial collar, forming a first piston unit stop surface configured to engage a mating second piston unit stop surface of said damper support unit (108) to limit motion of said piston unit (106.1) in said first direction.

10. The damper arrangement according to any one of the preceding claims, wherein
- said damper support unit (108) supports said cylinder unit (106.2) such that said cylinder unit (106.2) can move, in particular slide, with respect to said damper support unit (108) along said axial direction,
wherein, in particular, at least one of
- said damper unit (106) is configured such that, in a neutral state of said damper unit (106), said cylinder unit (106.2) has a defined pretension in said axial direction against said damper support unit (108);
- said damper support unit (108) and said cylinder unit (106.2) define a hard stop for said cylinder unit (106.2) in said second direction;
- said cylinder unit (106.2) has a first cylinder unit stop surface configured to engage a mating second cylinder unit stop surface of said damper support unit (108) to limit motion of said cylinder unit (106.2) in said second direction;
- said cylinder unit (106.2) has a radial protrusion, in particular a radial collar, forming a first cylinder unit (106.2) stop surface configured to engage a mating second cylinder unit stop surface of said damper support unit (108) to limit motion of said cylinder unit (106.2) in said second direction.

11. The damper arrangement according to any one of the preceding claims, wherein
- said damper support unit (108) comprises a housing unit receiving at least part of said damper unit (106)
wherein, in particular, at least one of
- said first interface part (106.7) of said piston unit (106.1) protrudes from said housing unit in said axial direction;
- said second interface part (106.8) of said cylinder unit (106.2) protrudes from said housing unit in said axial direction;
- said housing unit has a first bearing section (108.3), in particular, a first sliding bearing section, for supporting said piston unit (106.1), said first bearing section (108.3), in particular, engaging a cylindrical bearing surface of said piston unit (106.1);
- said housing unit has a second bearing section (108.4), in particular, a second sliding bearing section, for supporting said cylinder unit (106.2), said second bearing section (108.4), in particular, engaging a cylindrical bearing surface of said cylinder unit (106.2).

12. The damper arrangement according to any one of the preceding claims, wherein
- at least one of a volume compensation unit (110) is provided and at least one of said piston unit (106.1) and said cylinder unit (106.2) comprises a resetting duct unit (109),
- said volume compensation unit (110) is configured to compensate, in particular, in a neutral state of said damper unit (106), for a change in the density of said damping fluid (107) within said working chamber (106.3),
- said resetting duct unit (109) is configured to provide reduced flow resistance for a run-back flow of said damping fluid (107) from said second space back to said first space during resetting of said damper unit (106) from a deflected state to a neutral state
wherein, in particular, at least one of
- said volume compensation unit (110) comprises at least one compensation duct unit (110.1) for allowing exchange of damping fluid (107) between said working chamber (106.3) and a compensation reservoir (110.2);
- said volume compensation unit (110) comprises at least one compensation valve unit (110.3) located in a fluid duct between said working chamber (106.3) and a compensation reservoir (110.2) and allowing exchange of damping fluid (107) between said working chamber (106.3) and said compensation reservoir (110.2) when said damper unit (106) is in said neutral state and blocking exchange of damping fluid (107) between said working chamber (106.3) and said compensation reservoir (110.2) when said damper unit (106) is not in said neutral state;
- said resetting duct unit (109) comprises at least one fluid (107) duct for leading said damping fluid (107) from said second space back to said first space;
- said resetting duct unit (109) comprises at least one check valve unit located in a fluid duct and allowing passage of said damping fluid (107) from said second space back to said first space.

13. The damper arrangement according to any one of the preceding claims, wherein at least one of
- the damping fluid (107) is a viscous compressible fluid;
- the damping fluid (107) is at least one of a silicone fluid and a silicone oil;
- the damping fluid (107) exhibits a compressibility of 1% to 7%, preferably 2% to 3,1%, more preferably 2,1% to 3%, at room temperature and a pressure of 300 bar;
- the damping fluid (107) exhibits a substantially linear increase in compressibility over pressure at room temperature.

14. A rail vehicle unit comprising
- a rail vehicle structure (103.4, 102), and
- at least one damper arrangement according to any one of claims 1 to 13,
- said damper support unit (108) being connected to said rail vehicle structure (103.4, 102) forming said third vehicle component (103.4),
wherein, in particular, at least one of
- said at least one damper unit (106) is a transverse damper unit (106) of said rail vehicle unit with said axial direction, in particular, having at least a component along a transverse axis of said rail vehicle unit;
- said at least one damper unit (106) is a rotational damper unit (106) of said rail vehicle unit with said damping force damping a rotational motion between said a rail vehicle structure (103.4, 102) and a further rail vehicle structure (102, 103.4) about a rotation axis, in particular a rotation axis extending along a height direction of said rail vehicle unit (101);
- said at least one damper unit (106) is located at least substantially centrally along a transverse axis of said rail vehicle unit (101);
- at least one further damper arrangement (105) according to any one of claims 1 to 13 is provided, said damper arrangements (105) being spaced along a longitudinal axis of said rail vehicle unit (101).

15. The rail vehicle unit according to claim 14, wherein
- said rail vehicle structure is a running gear unit (103.4), in particular, a frame unit of said running gear unit (103) and at least one of said first vehicle component (102.1) and said second vehicle component (102.1) is a component of a wagon body unit (102) supported on said running gear unit (103)
or
- said rail vehicle structure is a wagon body unit (102) and at least one of said first vehicle component (102.1) and said second vehicle component (102.1) is a component of a running gear unit (103) supporting said wagon body unit (102).

## Patentansprüche

1. Dämpferanordnung für ein Schienenfahrzeug (101), insbesondere ein Stadtbahnfahrzeug, umfassend
- eine Dämpfereinheit (106),
wobei
- die Dämpfereinheit (106) umfasst eine Kolbeneinheit (106.1) und eine Zylindereinheit (106.2), die eine axiale Richtung und eine radiale Richtung definieren;
- die Zylindereinheit (106.2) umfasst eine dichtend geschlossene Arbeitskammer (106.3), die mit einer Dämpfungsflüssigkeit (107) gefüllt ist und ein Kolbenelement der Kolbeneinheit (106.1) axial verschiebbar aufnimmt;
- das Kolbenelement trennt die Arbeitskammer (106.3) in einen ersten Raum (106.5) und einen zweiten Raum (106.6);
- die Kolbeneinheit (106.1) weist ein erstes Schnittstellenteil (106.7) auf, das eine erste Schnittstelle der Dämpfereinheit (106) zu einer ersten Fahrzeugkomponente (102.1) des Schienenfahrzeugs bildet und von der Zylindereinheit (106.2) abgewandt ist;
- die Zylindereinheit (106.2) weist ein zweites Schnittstellenteil (106.8) auf, das eine zweite Schnittstelle der Dämpfereinheit (106) zu einer zweiten Fahrzeugkomponente (102.1) des Schienenfahrzeugs bildet und von der Kolbeneinheit (106.1) abgewandt ist;
**dadurch gekennzeichnet, dass**
- eine Dämpferstützeinheit (108) die Dämpfereinheit (106) trägt,
- die Dämpfereinheit (106) so konfiguriert ist, dass sie eine Dämpfungskraft bereitstellt, die eine Relativbewegung zwischen einer dritten Fahrzeugkomponente (103.4), die mit der Dämpferstützeinheit (108) verbunden ist, und mindestens einer der ersten Fahrzeugkomponente (102.1) und der zweiten Fahrzeugkomponente (102.1) entlang der axialen Richtung dämpft;
- die Dämpferstützeinheit (108) die Bewegung der Kolbeneinheit (106.1) in Bezug auf die Dämpferstützeinheit (108) in einer ersten Richtung entlang der axialen Richtung einschränkt, während sie eine Bewegung der Kolbeneinheit (106.1) in einer entgegengesetzten zweiten Richtung entlang der axialen Richtung zulässt;
- die Dämpferstützeinheit (108) die Bewegung der Zylindereinheit (106.2) in Bezug auf die Dämpferstützeinheit (108) in die zweite Richtung einschränkt, während sie eine Bewegung der Zylindereinheit (106.2) in die erste Richtung zulässt;
- das Kolbenelement (106.4) einen radialen Spalt (G) in Bezug auf die Zylindereinheit (106.2) in der radialen Richtung definiert, wobei der radiale Spalt (G) den Fluss des Dämpfungsmediums zwischen dem ersten Raum (106.5) und dem zweiten Raum (106.6) begrenzt, um eine definierte dynamische Charakteristik der Dämpfungskraft bereitzustellen, die von einer Geschwindigkeit einer Relativbewegung zwischen dem Kolbenelement (106.4) und der Zylindereinheit (106.2) entlang der axialen Richtung abhängt.

2. Dämpferanordnung nach Anspruch 1, wobei
- die Arbeitskammer (106.3) eine erste Kammer (106.13) und eine zweite Kammer (106.14) umfasst,
- wobei sich das Kolbenelement (106.4) in einem neutralen Zustand der Dämpfereinheit (106) im Bereich eines Übergangs zwischen der ersten Kammer (106.13) und der zweiten Kammer (106.14) befindet,
wobei insbesondere mindestens eines von
- der radiale Spalt (G) wird zwischen einer Wand der ersten Kammer (106.13) und dem Kolbenelement (106.4) gebildet;
- die erste Kammer (106.13) hat einen ersten Durchmesser und die zweite Kammer (106.14) hat einen zweiten Durchmesser, wobei der erste Durchmesser 20% bis 39%, vorzugsweise 51% bis 70%, weiter bevorzugt 40% bis 50%, des zweiten Durchmessers beträgt;
- im neutralen Zustand der Dämpfereinheit (106) weist der erste Raum (106.5) ein erstes Volumen und der zweite Raum (106.6) ein zweites Volumen auf, wobei das erste Volumen 10% bis 24%, vorzugsweise 36% bis 60%, weiter vorzugsweise 25% bis 35%, des zweiten Volumens beträgt.

3. Dämpferanordnung nach Anspruch 1 oder 2, wobei
- der radiale Spalt (G) in einem neutralen Zustand der Dämpfereinheit (106) eine erste Spaltbreite in der Radialrichtung aufweist, und
- der radiale Spalt (G) in einem ausgelenkten Zustand der Dämpfereinheit (106), in dem die Dämpfereinheit (106) die Dämpfungskraft ausübt, eine zweite Spaltbreite aufweist,
wobei insbesondere mindestens eines von
- die zweite Spaltbreite 25% bis 80%, vorzugsweise 39% bis 61%, weiter vorzugsweise 40% bis 60%, der ersten Spaltbreite beträgt;
- die erste Spaltbreite 0,10 mm bis 0,50 mm, vorzugsweise 0,19 mm bis 0,31 mm, weiter vorzugsweise 0,20 mm bis 0,30 mm beträgt;
- die zweite Spaltbreite 0,05 mm bis 0,25 mm, vorzugsweise 0,10 mm bis 0,16 mm, weiter vorzugsweise 0,11 mm bis 0,15 mm beträgt;
- die erste Spaltbreite entlang der axialen Richtung zumindest im Wesentlichen konstant ist.

4. Dämpferanordnung nach einem der vorhergehenden Ansprüche, wobei
- der radiale Spalt (G) im neutralen Zustand der Dämpfereinheit (106) eine erste Spaltlänge entlang der axialen Richtung aufweist,
wobei mindestens eines von
- die erste Spaltlänge 40% bis 99%, vorzugsweise 60% bis 81%, weiter vorzugsweise 61% bis 80%, der ersten Spaltbreite beträgt;
- die erste Spaltlänge 3 mm bis 15 mm, vorzugsweise 4,9 mm bis 8,1 mm, weiter vorzugsweise 5 mm bis 8 mm beträgt.

5. Dämpferanordnung nach Anspruch 4, wobei
- der radiale Spalt (G) in einem ausgelenkten Zustand der Dämpfereinheit (106), in dem die Dämpfereinheit (106) die Dämpfungskraft ausübt, eine zweite Spaltlänge aufweist,
wobei mindestens eines von
- die zweite Spaltlänge 10% bis 70%, vorzugsweise 30% bis 50%, weiter vorzugsweise 31% bis 49%, der ersten Spaltlänge beträgt;
- die Länge des zweiten Spalts beträgt 2,5 mm bis 17,5 mm, vorzugsweise 7,5 mm bis 12,5 mm, weiter vorzugsweise 7,75 mm bis 12,25 mm.

6. Dämpferanordnung nach einem der vorhergehenden Ansprüche, wobei
- die Dämpfereinheit (106) so konfiguriert ist, dass die Dämpfungskraft eine statische Komponente aufweist, die aus einer Kompression des Dämpfungsfluids (107) resultiert, und eine geschwindigkeitsabhängige dynamische Komponente, die aus der Strömung des Dämpfungsfluids zwischen dem ersten Raum (106.5) und dem zweiten Raum (106.6) durch den radiale Spalt (G) resultiert,
- der radiale Spalt (G) eine Spaltbreite in der Radialrichtung und eine Spaltlänge in der Axialrichtung aufweist,
- die Dämpfereinheit (106) so konfiguriert ist, dass die Spaltbreite und die Spaltlänge die geschwindigkeitsabhängige dynamische Komponente der Dämpfungskraft definieren,
wobei insbesondere mindestens eines von
- die Dämpfereinheit (106) so konfiguriert ist, dass die dynamische Komponente der Dämpfungskraft mit zunehmender Auslenkung der Dämpfereinheit (106) aus einem neutralen Zustand entlang der axialen Richtung zunimmt;
- die Dämpfereinheit (106) so konfiguriert ist, dass die Spaltlänge mit zunehmender Auslenkung der Dämpfereinheit (106) aus einem neutralen Zustand entlang der Axialrichtung zunimmt, wobei die Spaltlänge insbesondere zumindest teilweise schrittweise zunimmt und/oder zumindest teilweise kontinuierlich ansteigend zunimmt;
- die Dämpfereinheit (106) so ausgebildet ist, dass die Spaltweite mit zunehmender Auslenkung der Dämpfereinheit (106) aus einem neutralen Zustand entlang der Axialrichtung abnimmt, wobei die Spaltweite insbesondere zumindest teilweise stufenweise abnimmt und/oder zumindest teilweise kontinuierlich abnimmt.

7. Dämpferanordnung nach einem der vorhergehenden Ansprüche, wobei
- die Kolbeneinheit (106.1) eine Außenumfangsfläche und die Zylindereinheit (106.2) eine Innenumfangsfläche aufweist, wobei die Außenumfangsfläche und die Innenumfangsfläche den radialen Spalt (G) definieren,
wobei insbesondere mindestens eines von
- sich die Außenumfangsfläche in der zweiten Richtung verjüngt;
- die Außenumfangsfläche in einer eine Längsachse des Kolbenelements (106.4) enthaltenden Schnittebene eine zumindest abschnittsweise mehreckige und/oder eine zumindest abschnittsweise mehreckige Schnittkontur aufweist;
- die Innenumfangsfläche verjüngt sich in der zweiten Richtung;
- die Innenumfangsfläche weist in einer eine Längsachse der Zylindereinheit (106.2) enthaltenden Schnittebene eine zumindest abschnittsweise mehreckige und/oder eine zumindest abschnittsweise mehreckige Schnittkontur auf.

8. Dämpferanordnung nach einem der vorhergehenden Ansprüche, wobei
- die Kolbeneinheit (106.1) umfasst ein Kolbenstangenelement (106.15), das zwischen dem Kolbenelement (106.4) und der ersten Schnittstelle angeordnet ist,
wobei insbesondere mindestens eines von
- das Kolbenstangenelement (106.15) einen kleineren Durchmesser als das Kolbenelement (106.4) hat;
- das Kolbenstangenelement (106.15) durch die Zylindereinheit (106.2) gelagert, insbesondere verschiebbar gelagert ist;
- das Kolbenstangenelement (106.15) innerhalb des Arbeitsraums (106.3), insbesondere angrenzend an einen Übergang zwischen einem ersten Raum (106.13) und einem zweiten Raum (106.14) der Zylindereinheit (106.2), insbesondere verschiebbar, gelagert ist;
- das Kolbenstangenelement (106.15) ist angrenzend an das Kolbenelement (106.4), insbesondere verschiebbar, gelagert;
- das Kolbenstangenelement (106.15) durch die Dämpferstützeinheit (108), insbesondere verschiebbar, gelagert ist.

9. Dämpferanordnung nach einem der vorhergehenden Ansprüche, wobei
- die Dämpferstützeinheit (108) die Kolbeneinheit (106.1) so lagert, dass sich die Kolbeneinheit (106.1) gegenüber der Dämpferstützeinheit (108) entlang der axialen Richtung bewegen kann, insbesondere verschieben kann,
wobei insbesondere mindestens eines von
- die Dämpfereinheit (106) so ausgebildet ist, dass die Kolbeneinheit (106.1) in einem Neutralzustand der Dämpfereinheit (106) eine definierte Vorspannung in axialer Richtung gegen die Dämpferstützeinheit (108) aufweist;
- die Dämpferstützeinheit (108) und die Kolbeneinheit (106.1) einen harten Anschlag für die Kolbeneinheit (106.1) in der ersten Richtung bilden;
- die Kolbeneinheit (106.1) weist eine erste Kolbeneinheitsanschlagfläche auf, die so konfiguriert ist, dass sie mit einer passenden zweiten Kolbeneinheitsanschlagfläche der Dämpferstützeinheit (108) in Eingriff gelangt, um die Bewegung der Kolbeneinheit (106.1) in der ersten Richtung zu begrenzen;
- die Kolbeneinheit (106.1) einen radialen Vorsprung, insbesondere einen radialen Kragen, aufweist, der eine erste Kolbeneinheitsanschlagfläche bildet, die so konfiguriert ist, dass sie mit einer passenden zweiten Kolbeneinheitsanschlagfläche der Dämpferstützeinheit (108) in Eingriff kommt, um die Bewegung der Kolbeneinheit (106.1) in der ersten Richtung zu begrenzen.

10. Dämpferanordnung nach einem der vorhergehenden Ansprüche, wobei
- die Dämpferstützeinheit (108) die Zylindereinheit (106.2) derart lagert, dass sich die Zylindereinheit (106.2) bezüglich der Dämpferstützeinheit (108) entlang der axialen Richtung bewegen kann, insbesondere verschieben kann,
wobei insbesondere mindestens eines von
- die Dämpfereinheit (106) so ausgelegt ist, dass die Zylindereinheit (106.2) in einem Neutralzustand der Dämpfereinheit (106) eine definierte Vorspannung in axialer Richtung gegen die Dämpferstützeinheit (108) aufweist;
- die Dämpferstützeinheit (108) und die Zylindereinheit (106.2) einen harten Anschlag für die Zylindereinheit (106.2) in der zweiten Richtung bilden;
- die Zylindereinheit (106.2) eine erste Zylindereinheitsanschlagfläche aufweist, die so konfiguriert ist, dass sie mit einer passenden zweiten Zylindereinheitsanschlagfläche der Dämpferstützeinheit (108) in Eingriff gelangt, um die Bewegung der Zylindereinheit (106.2) in der zweiten Richtung zu begrenzen;
- die Zylindereinheit (106.2) einen radialen Vorsprung, insbesondere einen radialen Kragen, aufweist, der eine Anschlagfläche der ersten Zylindereinheit (106.2) bildet, die so konfiguriert ist, dass sie mit einer passenden Anschlagfläche der zweiten Zylindereinheit der Dämpferstützeinheit (108) in Eingriff kommt, um deren Bewegung der Zylindereinheit (106.2) in der zweiten Richtung zu begrenzen.

11. Dämpferanordnung nach einem der vorhergehenden Ansprüche, wobei
- die Dämpferstützeinheit (108) eine Gehäuseeinheit umfasst, die zumindest einen Teil der Dämpfereinheit (106) aufnimmt,
wobei insbesondere mindestens eines von
- der erste Schnittstellenteil (106.7) der Kolbeneinheit (106.1) in der axialen Richtung aus der Gehäuseeinheit hervorragt;
- der zweite Schnittstellenteil (106.8) der Zylindereinheit (106.2) ragt in der axialen Richtung aus der Gehäuseeinheit hervor;
- die Gehäuseeinheit einen ersten Lagerabschnitt (108.3), insbesondere einen ersten Gleitlagerabschnitt, zur Lagerung der Kolbeneinheit (106.1) aufweist, wobei der erste Lagerabschnitt (108.3) insbesondere an einer zylindrischen Lagerfläche der Kolbeneinheit (106.1) anliegt;
- die Gehäuseeinheit einen zweiten Lagerabschnitt (108.4), insbesondere einen zweiten Gleitlagerabschnitt, zur Lagerung der Zylindereinheit (106.2) aufweist, wobei der zweite Lagerabschnitt (108.4) insbesondere an einer zylindrischen Lagerfläche der Zylindereinheit (106.2) anliegt.

12. Dämpferanordnung nach einem der vorhergehenden Ansprüche, wobei
- mindestens eine Volumenausgleichseinheit (110) vorgesehen ist und mindestens eine von der Kolbeneinheit (106.1) und der Zylindereinheit (106.2) eine Rückstellkanaleinheit (109) aufweist,
- die Volumenausgleichseinheit (110) dazu ausgelegt ist, insbesondere in einem neutralen Zustand der Dämpfereinheit (106) eine Änderung der Dichte des Dämpfungsfluids (107) innerhalb der Arbeitskammer (106.3) zu kompensieren,
- die Rückstellkanaleinheit (109) so konfiguriert ist, dass sie während der Rückstellung der Dämpfereinheit (106) aus einem ausgelenkten Zustand in einen neutralen Zustand einen verringerten Strömungswiderstand für einen Rücklaufstrom des Dämpfungsfluids (107) vom zweiten Raum zurück zum ersten Raum bereitstellt,
wobei insbesondere mindestens eines von
- die Volumenausgleichseinheit (110) mindestens eine Ausgleichskanaleinheit (110.1) umfasst, um einen Austausch von Dämpfungsflüssigkeit (107) zwischen der Arbeitskammer (106.3) und einem Ausgleichsbehälter (110.2) zu ermöglichen;
- die Volumenausgleichseinheit (110) mindestens eine Ausgleichsventileinheit (110.3) umfasst, die in einem Fluidkanal zwischen der Arbeitskammer (106.3) und einem Ausgleichsbehälter (110.2) angeordnet ist und einen Austausch von Dämpfungsflüssigkeit (107) zwischen der Arbeitskammer (106.3) und dem Ausgleichsbehälter (110.2) ermöglicht, wenn sich die Dämpfereinheit (106) im neutralen Zustand befindet, und den Austausch von Dämpfungsflüssigkeit (107) zwischen der Arbeitskammer (106.3) und dem Ausgleichsbehälter (110.2) blockiert, wenn die Dämpfereinheit ( 106) sich nicht in diesem neutralen Zustand befindet;
- die Rückstellkanaleinheit (109) umfasst mindestens einen Fluidkanal (107), um das Dämpfungsfluid (107) von dem zweiten Raum zurück zu dem ersten Raum zu leiten;
- die Rückstellkanaleinheit (109) umfasst mindestens eine Rückschlagventileinheit, die in einem Fluidkanal angeordnet ist und den Durchtritt des Dämpfungsfluids (107) von dem zweiten Raum zurück zu dem ersten Raum ermöglicht.

13. Dämpferanordnung nach einem der vorhergehenden Ansprüche, wobei mindestens eines von
- die Dämpfungsflüssigkeit (107) ist eine viskose kompressible Flüssigkeit;
- die Dämpfungsflüssigkeit (107) ist mindestens eine von einer Silikonflüssigkeit und einem Silikonöl;
- die Dämpfungsflüssigkeit (107) weist bei Raumtemperatur und einem Druck von 300 bar eine Kompressibilität von 1% bis 7%, vorzugsweise 2% bis 3,1%, weiter vorzugsweise 2,1% bis 3% auf;
- die Dämpfungsflüssigkeit (107) weist bei Raumtemperatur einen im Wesentlichen linearen Anstieg der Kompressibilität gegenüber dem Druck auf.

14. Eine Schienenfahrzeugeinheit umfassen:
- eine Schienenfahrzeugstruktur (103.4, 102), und
- mindestens eine Dämpferanordnung nach einem der Ansprüche 1 bis 13, wobei
- die Dämpferstützeinheit (108) mit der Schienenfahrzeugstruktur (103.4, 102) verbunden ist, die die dritte Fahrzeugkomponente (103.4) bildet,
wobei insbesondere mindestens eines von
- die mindestens eine Dämpfereinheit (106) eine Querdämpfereinheit (106) der Schienenfahrzeugeinheit ist, wobei die Axialrichtung insbesondere mindestens eine Komponente entlang einer Querachse der Schienenfahrzeugeinheit aufweist;
- die mindestens eine Dämpfereinheit (106) eine Rotationsdämpfereinheit (106) der Schienenfahrzeugeinheit ist, wobei die Dämpfungskraft eine Drehbewegung zwischen einer Schienenfahrzeugstruktur (103.4, 102) und einer weiteren Schienenfahrzeugstruktur (102, 103.4) um eine Drehachse dämpft, insbesondere eine Drehachse, die sich entlang einer Höhenrichtung der Schienenfahrzeugeinheit (101) erstreckt;
- die mindestens eine Dämpfereinheit (106) zumindest im Wesentlichen mittig entlang einer Querachse der Schienenfahrzeugeinheit (101) angeordnet ist;
- mindestens eine weitere Dämpferanordnung (105) nach einem der Ansprüche 1 bis 13 vorgesehen ist, wobei die Dämpferanordnungen (105) entlang einer Längsachse der Schienenfahrzeugeinheit (101) beabstandet sind.

15. Schienenfahrzeugeinheit nach Anspruch 14, wobei
- es sich bei der Schienenfahrzeugstruktur um eine Fahrwerkseinheit (103.4) handelt, insbesondere um eine Rahmeneinheit der Fahrwerkseinheit (103), und zumindest eine von der ersten Fahrzeugkomponente (102.1) und der zweiten Fahrzeugkomponente (102.1) ein Bestandteil einer auf der Fahrwerkseinheit (103) gelagerten Wagenkasteneinheit (102) ist
oder
- die Schienenfahrzeugstruktur eine Wagenkasteneinheit (102) ist und mindestens eine der ersten Fahrzeugkomponenten (102.1) und der zweiten Fahrzeugkomponente (102.1) ein Bestandteil einer die Wagenkasteneinheit (102) tragenden Fahrwerkseinheit (103) ist.

## Revendications

1. Agencement amortisseur pour un véhicule ferroviaire (101), en particulier un véhicule léger sur rail, comprenant
- une unité amortisseur (106),
dans lequel
- ladite unité amortisseur (106) comprend une unité piston (106.1) et une unité cylindre (106.2) définissant une direction axiale et une direction radiale ;
- ladite unité cylindre (106.2) comprend une chambre de travail fermée de manière étanche (106.3) remplie d'un fluide amortisseur (107) et recevant de manière coulissante axialement un élément de piston de ladite unité piston (106.1) ;
- ledit élément de piston sépare ladite chambre de travail (106.3) en un premier espace (106.5) et un deuxième espace (106.6) ;
- ladite unité de piston (106.1) comporte une première partie d'interface (106.7) formant une première interface de ladite unité d'amortisseur (106) avec un premier composant de véhicule (102.1) dudit véhicule ferroviaire et opposée à ladite unité de cylindre (106.2) ;
- ladite unité cylindre (106.2) comporte une seconde partie d'interface (106.8) formant une seconde interface de ladite unité amortisseur (106) avec un second composant de véhicule (102.1) dudit véhicule ferroviaire et opposée à ladite unité piston (106.1) ;
**caractérisé en ce que**
- une unité support d'amortisseur (108) supporte ladite unité d'amortisseur (106),
- ladite unité d'amortisseur (106) est configurée pour fournir une force d'amortissement amortissant un mouvement relatif entre un troisième composant du véhicule (103.4) connecté à ladite unité de support d'amortisseur (108) et au moins l'un dudit premier composant du véhicule (102.1) et dudit deuxième un composant de véhicule (102.1) le long de ladite direction axiale ;
- ladite unité de support d'amortisseur (108) restreint le mouvement de ladite unité de piston (106.1) par rapport à ladite unité de support d'amortisseur (108) dans une première direction le long de ladite direction axiale tout en permettant le mouvement de ladite unité de piston (106.1) dans une seconde direction opposée le long de ladite direction axiale ;
- ladite unité de support d'amortisseur (108) restreint le mouvement de ladite unité de cylindre (106.2) par rapport à ladite unité de support d'amortisseur (108) dans ladite seconde direction tout en permettant le mouvement de ladite unité de cylindre (106.2) dans ladite première direction ;
- ledit élément de piston (106.4) définit un interstice radial (G) par rapport à ladite unité cylindre (106.2) dans ladite direction radiale, ledit interstice radial (G) limitant l'écoulement dudit milieu amortisseur entre ledit premier espace (106.5) et ledit second espace (106.6) afin de fournir une caractéristique dynamique définie de ladite force d'amortissement qui dépend d'une vitesse d'un mouvement relatif entre ledit élément de piston (106.4) et ladite unité de cylindre (106.2) le long de ladite direction axiale.

2. Agencement d'amortisseur selon la revendication 1, dans lequel
- ladite chambre de travail (106.3) comprend un premier compartiment (106.13) et un deuxième compartiment (106.14),
- ledit élément piston (106.4), dans un état neutre de ladite unité amortisseur (106), étant situé dans la zone de transition entre ledit premier compartiment (106.13) et ledit deuxième compartiment (106.14),
dans lequel, en particulier, au moins un de
- ledit interstice radial (G) est formé entre une paroi dudit premier compartiment (106.13) et ledit élément de piston (106.4) ;
- ledit premier compartiment (106.13) a un premier diamètre et ledit deuxième compartiment (106.14) a un deuxième diamètre, ledit premier diamètre étant de 20% à 39%, de préférence de 51% à 70%, de préférence encore de 40% à 50%, dudit deuxième diamètre ;
- dans ledit état neutre de ladite unité d'amortisseur (106), ledit premier espace (106.5) a un premier volume et ledit deuxième espace (106.6) a un deuxième volume, ledit premier volume étant de 10% à 24%, de préférence de 36% à 60%, plus préférablement 25% à 35%, dudit deuxième volume.

3. Agencement d'amortisseur selon la revendication 1 ou 2, dans lequel
- ledit interstice radial (G), dans un état neutre de ladite unité d'amortisseur (106), a une première largeur d'interstice dans ladite direction radiale, et
- ledit interstice radial (G), dans un état dévié de ladite unité d'amortisseur (106) où ladite unité d'amortisseur (106) exerce ladite force d'amortissement, a une deuxième largeur d'interstice,
dans lequel, en particulier, au moins un de
- ladite seconde largeur d'interstice représente 25% à 80%, de préférence 39% à 61%, plus préférablement 40% à 60%, de ladite première largeur d'interstice ;
- ladite première largeur d'interstice est de 0,10 mm à 0,50 mm, de préférence de 0,19 mm à 0,31 0 mm, plus préférablement de 0,20 mm à 0,30 mm ;
- ladite deuxième largeur d'interstice est de 0,05 mm à 0,25 mm, de préférence de 0,10 mm à 0,16 mm, plus préférablement de 0,11 mm à 0,15 mm ;
- ladite première largeur d'interstice est au moins sensiblement constante le long de ladite direction axiale.

4. Agencement d'amortisseur selon l'une quelconque des revendications précédentes, dans lequel
- ledit interstice radial (G), dans ledit état neutre de ladite unité d'amortisseur (106), a une première longueur d'interstice le long de ladite direction axiale,
dans lequel au moins un de
- ladite première longueur d'interstice représente 40% à 99%, de préférence 60% à 81%, plus préférablement 61% à 80%, de ladite première largeur d'interstice ;
- ladite première longueur d'interstice est de 3 mm à 15 mm, de préférence de 4,9 mm à 8,1 mm, plus préférablement de 5 mm à 8 mm.

5. Agencement d'amortisseur selon la revendication 4, dans lequel
- ledit interstice radial (G), dans un état dévié de ladite unité d'amortisseur (106) où ladite unité d'amortisseur (106) exerce ladite force d'amortissement, a une seconde longueur d'interstice,
dans lequel au moins un de
- ladite seconde longueur d'interstice représente 10% à 70%, de préférence 30% à 50%, plus préférablement 31% à 49%, de ladite première longueur d'interstice;
- ladite deuxième longueur d'interstice est de 2,5 mm à 17,5 mm, de préférence de 7,5 mm à 12,5 mm, plus préférablement de 7,75 mm à 12,25 mm.

6. Agencement d'amortisseur selon l'une quelconque des revendications précédentes, dans lequel
- ladite unité d'amortissement (106) est configurée de telle sorte que ladite force d'amortissement présente une composante statique résultant d'une compression dudit fluide d'amortissement (107) et une composante dynamique dépendant de la vitesse et résultant dudit écoulement dudit fluide d'amortissement entre ledit premier espace (106.5) et ledit deuxième espace (106.6) à travers ledit interstice radial (G),
- ledit interstice radial (G) a une largeur d'interstice dans ladite direction radiale et une longueur d'interstice le long de ladite direction axiale,
- ladite unité d'amortissement (106) est configurée de telle sorte que ladite largeur d'interstice et ladite longueur d'interstice définissent ladite composante dynamique de ladite force d'amortissement dépendant de la vitesse,
dans lequel, en particulier, au moins un de
- ladite unité d'amortisseur (106) est configurée de telle sorte que ladite composante dynamique de ladite force d'amortissement augmente avec la déviation croissante de ladite unité d'amortisseur (106) à partir d'un état neutre le long de ladite direction axiale ;
- ladite unité d'amortisseur (106) est configurée de telle sorte que ladite longueur d'espace augmente avec la déviation croissante de ladite unité d'amortisseur (106) à partir d'un état neutre le long de ladite direction axiale, ladite longueur d'espace, en particulier, augmentant au moins partiellement par paliers et/ou augmentant au moins partiellement de façon continue ;
- ladite unité d'amortisseur (106) est configurée de telle sorte que ladite largeur d'interstice diminue avec une déviation croissante de ladite unité d'amortisseur (106) à partir d'un état neutre le long de ladite direction axiale, ladite largeur d'interstice, en particulier, diminuant au moins partiellement par étapes et/ou au moins partiellement en diminution continue.

7. Agencement d'amortisseur selon l'une quelconque des revendications précédentes, dans lequel
- ladite unité piston (106.1) a une surface circonférentielle externe et ladite unité cylindre (106.2) a une surface circonférentielle interne, ladite surface circonférentielle externe et ladite surface circonférentielle interne définissant ledit interstice radial (G),
dans lequel, en particulier, au moins un de
- ladite surface circonférentielle externe se rétrécit dans ladite seconde direction ;
- ladite surface circonférentielle externe, dans un plan de coupe incluant un axe longitudinal dudit élément de piston (106.4), a un contour de coupe au moins en sections polygonal en coupe et/ou un contour de coupe au moins en sections polygonal ;
- ladite surface circonférentielle interne se rétrécit dans ladite seconde direction ;
- ladite surface circonférentielle interne, dans un plan de coupe incluant un axe longitudinal de ladite unité cylindrique (106.2), présente un contour de coupe au moins en sections polygonal en coupe et/ou un contour de coupe au moins en sections polygonal ;

8. Agencement d'amortisseur selon l'une quelconque des revendications précédentes, dans lequel
- ladite unité de piston (106.1) comprend un élément de tige de piston (106.15) situé entre ledit élément de piston (106.4) et ladite première interface
dans lequel, en particulier, au moins un de
- ledit élément de tige de piston (106.15) a un diamètre plus petit que ledit élément de piston (106.4) ;
- ledit élément de tige de piston (106.15) est supporté, notamment de manière coulissante, par ladite unité cylindre (106.2) ;
- ledit élément de tige de piston (106.15) est supporté, en particulier de manière coulissante, à l'intérieur de ladite chambre de travail (106.3), en particulier à proximité d'une transition entre un premier compartiment (106.13) et un deuxième compartiment (106.14) de l'unité cylindre (106,2);
- ledit élément de tige de piston (106.15) est supporté, en particulier de manière coulissante, à proximité dudit élément de piston (106.4) ;
- ledit élément de tige de piston (106.15) est supporté, notamment de manière coulissante, par ladite unité de support d'amortisseur (108).

9. Agencement d'amortisseur selon l'une quelconque des revendications précédentes, dans lequel
- ladite unité de support d'amortisseur (108) supporte ladite unité de piston (106.1) de telle sorte que ladite unité de piston (106.1) peut se déplacer, en particulier glisser, par rapport à ladite unité de support d'amortisseur (108) le long de ladite direction axiale,
dans lequel, en particulier, au moins un de
- ladite unité d'amortisseur (106) est configurée de telle sorte que, dans un état neutre de ladite unité d'amortisseur (106), ladite unité de piston (106.1) a une prétension définie dans ladite direction axiale contre ladite unité de support d'amortisseur (108) ;
- ladite unité de support d'amortisseur (108) et ladite unité de piston (106.1) définissent une butée dure pour ladite unité de piston (106.1) dans ladite première direction ;
- ladite unité de piston (106.1) a une première surface d'arrêt d'unité de piston configurée pour venir en prise avec une seconde surface d'arrêt d'unité de piston correspondante de ladite unité de support d'amortisseur (108) pour limiter le mouvement de ladite unité de piston (106.1) dans ladite première direction ;
- ladite unité de piston (106.1) présente une saillie radiale, en particulier un collier radial, formant une première surface d'arrêt d'unité de piston configurée pour engager une seconde surface d'arrêt d'unité de piston correspondante de ladite unité de support d'amortisseur (108) pour limiter le mouvement de ladite unité de piston (106.1) dans ladite première direction.

10. Agencement d'amortisseur selon l'une quelconque des revendications précédentes, dans lequel
- ladite unité de support d'amortisseur (108) supporte ladite unité de cylindre (106.2) de telle sorte que ladite unité de cylindre (106.2) peut se déplacer, notamment glisser, par rapport à ladite unité de support d'amortisseur (108) le long de ladite direction axiale,
dans lequel, en particulier, au moins un de
- ladite unité d'amortisseur (106) est configurée de telle sorte que, dans un état neutre de ladite unité d'amortisseur (106), ladite unité de cylindre (106.2) a une prétension définie dans ladite direction axiale contre ladite unité de support d'amortisseur (108) ;
- ladite unité de support d'amortisseur (108) et ladite unité de cylindre (106.2) définissent une butée dure pour ladite unité de cylindre (106.2) dans ladite seconde direction ;
- ladite unité de cylindre (106.2) a une première surface d'arrêt d'unité de cylindre configurée pour venir en prise avec une seconde surface d'arrêt d'unité de cylindre correspondante de ladite unité de support d'amortisseur (108) pour limiter le mouvement de ladite unité de cylindre (106.2) dans ladite seconde direction ;
- ladite unité de cylindre (106.2) présente une saillie radiale, en particulier un collier radial, formant une première surface d'arrêt de l'unité de cylindre (106.2) configurée pour engager une deuxième surface d'arrêt de l'unité de cylindre correspondante de ladite unité de support d'amortisseur (108) pour limiter le mouvement de ladite unité de cylindre (106.2) dans ladite seconde direction.

11. Agencement d'amortisseur selon l'une quelconque des revendications précédentes, dans lequel
- ladite unité de support d'amortisseur (108) comprend une unité de boîtier recevant au moins une partie de ladite unité d'amortisseur (106),
dans lequel, en particulier, au moins un de
- ladite première partie d'interface (106.7) de ladite unité piston (106.1) fait saillie depuis ladite unité de boîtier dans ladite direction axiale ;
- ladite seconde partie d'interface (106.8) de ladite unité cylindre (106.2) fait saillie depuis ladite unité de boîtier dans ladite direction axiale ;
- ladite unité de boîtier comporte une première section de palier (108.3), en particulier une première section de palier coulissant, pour supporter ladite unité piston (106.1), ladite première section de palier (108.3), en particulier, venant en prise avec une surface d'appui cylindrique de ladite unité piston (106.1);
- ladite unité de boîtier comporte une seconde section de palier (108.4), en particulier une seconde section de palier coulissant, pour supporter ladite unité cylindre (106.2), ladite seconde section de palier (108.4), en particulier, s'engageant dans une surface d'appui cylindrique de ladite unité cylindre (106.2).

12. Agencement d'amortisseur selon l'une quelconque des revendications précédentes, dans lequel
- au moins une unité parmi une unité de compensation de volume (110) est prévue et au moins une parmi ladite unité à piston (106.1) et ladite unité à cylindre (106.2) comprend une unité de conduit de réinitialisation (109),
- ladite unité de compensation de volume (110) est configurée pour compenser, notamment, dans un état neutre de ladite unité amortisseur (106), une variation de la densité dudit fluide amortisseur (107) au sein de ladite chambre de travail (106.3),
- ladite unité de conduit de réinitialisation (109) est configurée pour fournir une résistance à l'écoulement réduite pour un écoulement en retour dudit fluide d'amortissement (107) depuis ledit deuxième espace vers ledit premier espace pendant la réinitialisation de ladite unité d'amortisseur (106) à partir d'un état dévié vers un état neutre
dans lequel, en particulier, au moins un des
- ladite unité de compensation de volume (110) comprend au moins une unité de conduit de compensation (110.1) pour permettre l'échange de fluide d'amortissement (107) entre ladite chambre de travail (106.3) et un réservoir de compensation (110.2) ;
- ladite unité de compensation de volume (110) comprend au moins une unité de vanne de compensation (110.3) située dans un conduit de fluide entre ladite chambre de travail (106.3) et un réservoir de compensation (110.2) et permettant l'échange de fluide d'amortissement (107) entre ladite chambre de travail (106.3) et ledit réservoir de compensation (110.2) lorsque ladite unité d'amortisseur (106) est dans ledit état neutre et bloquant l'échange de fluide d'amortissement (107) entre ladite chambre de travail (106.3) et ledit réservoir de compensation (110.2) lorsque ladite unité d'amortisseur (106) n'est pas dans ledit état neutre ;
- ladite unité de conduit de réinitialisation (109) comprend au moins un conduit de fluide (107) pour ramener ledit fluide d'amortissement (107) dudit deuxième espace audit premier espace ;
- ladite unité de conduit de réinitialisation (109) comprend au moins une unité de vanne anti-retour située dans un conduit de fluide et permettant le passage dudit fluide d'amortissement (107) depuis ledit deuxième espace vers ledit premier espace.

13. Agencement d'amortisseur selon l'une quelconque des revendications précédentes, dans lequel au moins l'un de
- le fluide amortisseur (107) est un fluide visqueux compressible ;
- le fluide amortisseur (107) est au moins un fluide silicone et/ou une huile silicone ;
- le fluide amortisseur (107) présente une compressibilité de 1% à 7%, de préférence de 2% à 3,1%, de préférence encore de 2,1% à 3%, à température ambiante et à une pression de 300 bar ;
- le fluide amortisseur (107) présente une augmentation sensiblement linéaire de la compressibilité sous pression à température ambiante.

14. Unité de véhicule ferroviaire comprenant
- une structure de véhicule ferroviaire (103.4, 102), et
- au moins un agencement d'amortisseur selon l'une quelconque des revendications 1 à 13,
- ladite unité support d'amortisseur (108) étant reliée à ladite structure de véhicule ferroviaire (103.4, 102) formant ledit troisième composant de véhicule (103.4),
dans lequel, en particulier, au moins un de
- ladite au moins une unité amortisseur (106) est une unité amortisseur transversale (106) de ladite unité de véhicule ferroviaire avec ladite direction axiale, en particulier, ayant au moins un composant le long d'un axe transversal de ladite unité de véhicule ferroviaire ;
- ladite au moins une unité d'amortisseur (106) est une unité d'amortisseur de rotation (106) de ladite unité de véhicule ferroviaire, ladite force d'amortissement amortissant un mouvement de rotation entre ladite structure de véhicule ferroviaire (103.4, 102) et une autre structure de véhicule ferroviaire (102, 103.4) autour d'un axe de rotation, en particulier un axe de rotation s'étendant le long d'une direction en hauteur de ladite unité de véhicule ferroviaire (101) ;
- ladite au moins une unité d'amortisseur (106) est située au moins sensiblement au centre le long d'un axe transversal de ladite unité de véhicule ferroviaire (101) ;
- au moins un autre agencement amortisseur (105) selon l'une quelconque des revendications 1 à 13 est prévu, lesdits agencements amortisseurs (105) étant espacés le long d'un axe longitudinal de ladite unité de véhicule ferroviaire (101).

15. Unité de véhicule ferroviaire selon la revendication 14, dans laquelle
- ladite structure de véhicule ferroviaire est une unité de train de roulement (103.4), en particulier, une unité de châssis de ladite unité de train de roulement (103) et au moins l'un dudit premier composant de véhicule (102.1) et dudit deuxième composant de véhicule (102.1) est un composant d'une unité de caisse de wagon (102) supportée sur ladite unité de train de roulement (103)
ou
- ladite structure de véhicule ferroviaire est une unité de caisse de wagon (102) et au moins l'un dudit premier composant de véhicule (102.1) et dudit deuxième composant de véhicule (102.1) est un composant d'une unité de train de roulement (103) supportant ladite unité de caisse de wagon (102).
